# EUROPEAN PATENT SPECIFICATION

(11) **EP 4 400 250 B1**
(45) Date of publication and mention of the grant of the patent: **26.11.2025**
(21) Application number: 22867237.4
(22) Date of filing: 29.08.2022
(51) Int. Cl.: B23K 26/38, B23K 26/00, B23K 26/08, B23K 37/02

(54) **LASER PROCESSING METHOD AND LASER PROCESSING MACHINE**
LASERBEARBEITUNGSVERFAHREN UND -MASCHINE
PROCÉDÉ DE TRAITEMENT AU LASER ET DISPOSITIF DE TRAITEMENT AU LASER

(30) Priority: 09.09.2021 JP 2021146945; 09.09.2021 JP 2021146965
(43) Date of publication of application: 17.07.2024
(73) Proprietor: Amada Co., Ltd., Isehara-shi, Kanagawa 259-1196 (JP)
(72) Inventor: KAMIYAMA, Takayuki, Isehara-shi, Kanagawa 259-1196 (JP); MASHIKO, Yutaka, Isehara-shi, Kanagawa 259-1196 (JP); MIZOGUCHI, Yuya, Isehara-shi, Kanagawa 259-1196 (JP)
(74) Representative: Grünecker Patent- und Rechtsanwälte PartG mbB
(86) International application number: PCT/JP2022/032343
(87) International publication number: WO 2023/037915

(56) References cited:
- JP-A- 2007 196 254
- JP-A- 2008 200 712
- JP-A- 2016 068 144
- JP-A- 2016 074 007
- JP-A- 2020 066 011
- JP-A- H1 080 784
- JP-A- H10 249 563
- US-A1- 2003 222 058

## Description

The present embodiment relates to laser processing methods and laser processing machines, see claims 1 and 7 and 6 and 10 respectively.

### [BACKGROUND ART]

Processing machines for cutting a plate-like workpiece (sheet metal) and producing a part having a predetermined shape have been widely used. An example of processing machine is a laser processing machine for cutting and processing a workpiece by means of a laser beam. The laser processing machine includes a laser processing machine main body, and a control device such as an NC (numerical control) device, in which the control device controls the laser processing machine main body based on a processing program.

Conventionally, in thermal cutting processing of laser processing machines, a technique has been known in which when processing a vertex (edge portion) of a corner portion (hereinafter, referred to as an outer portion) that presents a convex portion toward the outer side of a product, forming a loop-like processing path lateral to the edge portion, thereby suppressing a meltdown of the lower surface of the edge portion, and improving processing quality.

Patent Literature 1 discloses a method of interrupting thermal cutting processing in a loop-like processing path formed lateral to the edge portion, and resuming the thermal cutting processing when a workpiece reaches the vicinity of the edge portion again.

### [CITATION LIST]

### [PATENT LITERATURE]

Patent Literature 1: Japanese Unexamined Patent Application Publication No. 1998 (H10)-249563
Patent Literature 2 : Japanese Unexamined Patent application No. 2016 / 074007 A (describing the preamble of claims 1, 6, 7 and 10)

### [SUMMARY OF THE INVENTION]

However, in the processing method according to Patent Literature 1, after thermal cutting processing of a thick workpiece is interrupted in the loop-like processing path, when the workpiece reaches the vicinity of the edge portion again to resume thermal cutting processing, there is a risk that a heat will be accumulated in the vicinity of the portion already cut, causing overburning and forming a concave portion in the cutting surface. In addition, when resuming thermal cutting processing, an meltdown may occur on the lower surface of the edge portion.

A first aspect of the present invention is a laser processing method as defined in claim 1, that performs cutting processing of a workpiece by moving a processing head relatively that emits a laser beam toward the workpiece along a cutting processing locus having a first side, a second side, and a corner portion where the first side and the second side intersect with each other, in which the method includes:
moving the processing head to the corner portion along the first side without decelerating while emitting the laser beam;
stopping emitting the laser beam after the processing head moving along the first side reaches the corner portion;
moving the processing head from the corner portion to a first predetermined position separated by a first predetermined distance along the second side while emitting the laser beam intermittently, and stopping emitting the laser beam and moving the processing head when the processing head reaches the first predetermined position;
moving the processing head to a position that is on an extension line of the second side and before the corner portion, and then accelerating the processing head toward the corner portion, in a state where an emission of the laser beam is stopped; and
starting to emit the laser beam when the processing head accelerating toward the corner portion reaches the corner portion, and moving the processing head along the second side.

Further, a second aspect of the present invention is a laser processing machine as defined in claim 6, and including:
a processing machine main body that performs cutting processing of a workpiece by moving a processing head relatively that emits a laser beam toward the workpiece along a cutting processing locus having a first side, a second side, and a corner portion where the first side and the second side intersect with each other; and
a control unit that controls the processing machine main body,
in which the control unit controls the processing machine main body in such a way as to:
   move the processing head to the corner portion along the first side without decelerating while emitting the laser beam;
   stop emitting the laser beam and moving the processing head after the processing head moving along the first side reaches the corner portion;
   move the processing head from the corner portion to a first predetermined position separated by a first predetermined distance along the second side while emitting the laser beam intermittently, and stop emitting the laser beam when the processing head reaches the first predetermined position;
   move the processing head to a position that is on an extension line of the second side and before the corner portion, and then accelerate the processing head toward the corner portion, in a state where an emission of the laser beam is stopped; and
   start to emit the laser beam when the processing head accelerating toward the corner portion reaches the corner portion, and move the processing head along the second side.

In the laser processing method and the laser processing machine having the above-described structure, the cutting processing is performed up to the corner portion while maintaining a normal cutting speed without decelerating the cutting processing, and the laser beam is stopped after the processing head reaches the corner portion. This makes it possible to suppress instability of the cutting condition caused by decelerating the processing head before reaching the corner portion, thereby suppressing a meltdown of the corner portion. Further, the laser processing method and the laser processing machine having the above-described structure can also be applied to the corner portion of the cutout (corner portion that presents a concave portion at the inner part of the product) because the emission of the laser beam is stopped at the corner portion. This makes it possible to reduce a cutting range of the workpiece, thereby suppressing a decrease in a usage rate

In the laser processing method and the laser processing machine having the above-described structure, a cut can be made from the corner portion by a predetermined distance along the second side by means of a pulsed laser beam. By making a cut by means of the pulsed laser beam, when cutting processing starts from the corner portion along the second side, it is possible to suppress overburning caused by the accumulation of the heat in the vicinity of the already cut first side. This makes it possible to suppress the formation of a concave portion in the cutting side surface. In addition, it is possible to form a cutting front on the cutting processing locus of the second side to be cut next at the corner portion, thereby making it possible to suppress a meltdown of the lower surface of the corner portion when starting to cut the second side.

In the laser processing method and the laser processing machine having the above-described structure, the cutting processing of the second side can be started from the corner portion at normal cutting speed. This makes it possible to suppress instability of the cutting condition, thereby suppressing a meltdown of the corner portion.

Further, athird aspect of the present invention is a laser processing method as defined in claim 7, and including:
moving a laser beam under a normal processing condition, which has reached a vertex by moving on a workpiece along one side among two sides which are made to abut against each other at the vertex of a corner portion which presents a convex portion toward an outer side of a product acquired by cutting and processing the workpiece, further on the workpiece to a first processing point positioned on an extension line of one side along the extension line of one side by passing through the vertex;
moving an irradiation position of the laser beam on the workpiece from the first processing point to a second processing point which is positioned on an extension line of the other side among the two sides;
moving the laser beam on the workpiece from the second processing point to a third processing point on the other side along the extension line of the other side and the other side by passing through the vertex, under a corner processing condition having lower speed and lower output than the normal processing condition;
moving the irradiation position of the laser beam on the workpiece from the third processing point to the second processing point, in a state where output of the laser beam is stopped; and
moving the laser beam, which has moved on the workpiece from the second processing point to the vertex along the extension line of the other side under the normal processing condition, further on the workpiece along the other side under the normal processing condition.

Further, afourth aspect of the present invention is a laser processing machine as defined in claim 10, and including:
a processing machine main body which irradiates a workpiece with a laser beam along a locus corresponding to a shape of a product acquired by cutting and processing the workpiece; and
a control unit which controls the processing machine main body,
in which the control unit controls the processing machine main body in such a way as to:
   move a laser beam under a normal processing condition, which has reached a vertex by moving on a workpiece along one side among two sides which are made to abut against each other at the vertex of a corner portion which presents a convex portion toward an outer side of the product, further on the workpiece to a first processing point positioned on an extension line of one side along the extension line of one side by passing through the vertex;
   move an irradiation position of the laser beam on the workpiece from the first processing point to a second processing point which is positioned on an extension line of the other side among the two sides;
   move the laser beam on the workpiece from the second processing point to a third processing point on the other side along the extension line of the other side and the other side by passing through the vertex, under a corner processing condition having lower speed and lower output than the normal processing condition;
   move the irradiation position of the laser beam on the workpiece from the third processing point to the second processing point, in a state where output of the laser beam is stopped; and
   move the laser beam, which has moved on the workpiece from the second processing point to the vertex along the extension line of the other side under the normal processing condition, further on the workpiece along the other side through the third processing point, under the normal processing condition.

In the laser processing method and the laser processing machine having the above-described structure, the laser beam under the normal processing condition, which has reached the vertex of the corner portion of the outer corner along one side of the corner portion of the outer corner of the product, is moved to the first processing point on an extension line of one side. Thereafter, when the laser beam under the normal processing condition, which has reached the vertex of the corner portion of the outer corner along one side of the corner portion of the outer corner of the product, is moved to the first processing point on an extension line of one side, a kerf passing through the vertex of the corner portion of the outer corner is formed from one side of the workpiece to the first processing point. The kerf formed up to the first processing point is linearly arranged on the workpiece along one side of the corner portion of the outer corner, and is arranged between the second processing point and the third processing point, which are positioned on the other side and the extension line of the other side with the vertex of the corner portion of the outer corner sandwiched therebetween.

In the laser processing method and the laser processing machine having the above-described structure, the laser beam is moved from the second processing point to the third processing point. When the laser beam is moved from the second processing point to the third processing point, the laser beam passes through the step-over portion which steps over the front side and the other side of the kerf passing through the vertex of the corner portion of the outer corner. The laser beam which has passed through the step-over portion forms a kerf between the kerf of the workpiece and the third processing point along the other side of the corner portion of the outer corner. The kerf functions as a cutting front for the laser beam which passes through the step-over portion.

The laser beam which passes through the step-over portion moves under the corner processing condition having lower speed and lower output than the normal processing condition. Therefore, in the formation of the kerf which functions as a cutting front, a deformation due to the heat input which is accumulated in the step-over portion can be suppressed in the cutting surface of the kerf.

The second processing point and the third processing point are arranged on the other side of the corner portion of the outer corner of the product or on the extension line thereof, on both sides with the vertex of the corner portion of the outer corner sandwiched therebetween. In the laser processing method and the laser processing machine having the above-described structure, after the formation of the kerf serving as a cutting front, the laser beam is moved from the second processing point along the other side through the third processing point. In the laser processing method and the laser processing machine having the above-described structure, the laser beam can be moved on the other side or an extension line thereof, under the linear condition (normal processing condition) without reducing speed and output.

For this reason, in the laser processing method and the laser processing machine having the above-described structure, when cutting and processing the workpiece along two sides of the corner portion of the outer corner of the product, it is possible to suppress a deformation of the cutting surface due to a change in the processing condition.

One aspect of the present invention makes it possible to improve the quality of an edge portion in thermal cutting processing of a thick workpiece.

### [BRIEF DESCRIPTION OF THE DRAWINGS]

[FIG. 1] FIG. 1 is a diagram illustrating an example of an overall structure of a laser processing machine according to a first embodiment of the present invention.
[FIG. 2] FIG. 2 is a block diagram for explaining an NC device according to the first embodiment of the present invention.
[FIG. 3] FIG. 3 is a diagram for explaining processing at an edge portion of a cutout of the laser processing machine according to the first embodiment of the present invention.
[FIG. 4] FIG. 4 is a diagram for explaining processing at the edge portion of an outer corner of the laser processing machine according to the first embodiment of the present invention.
[FIG. 5A] FIG. 5A is a schematic diagram of a processed cross-section in laser processing in a case where no cut is made from the edge portion in the first embodiment of the present invention.
[FIG. 5B] FIG. 5B is a schematic diagram of a processed cross-section in laser processing in a case where a cut is made from the edge portion in the first embodiment of the present invention.
[FIG. 6] FIG. 6 is a diagram for explaining a cutting condition screen in which an operator inputs a request for edge processing in the first embodiment of the present invention.
[FIG. 7] FIG. 7 is a diagram for explaining setting items for edge processing in the first embodiment of the present invention.
[FIG. 8] FIG. 8 is a diagram for explaining a part editing screen for setting edge processing on a CAM in the first embodiment of the present invention.
[FIG. 9] FIG. 9 is a diagram illustrating the content of a processing program when performing edge processing of the edge portion of the cutout in the first embodiment of the present invention.
[FIG. 10] FIG. 10 is a diagram illustrating the content of a processing program when performing edge processing of the edge portion of the outer corner in the first embodiment of the present invention.
[FIG. 11] FIG. 11 is a diagram for explaining a tool radius compensation.
[FIG. 12] FIG. 12 is a diagram for explaining a tool radius compensation.
[FIG. 13] FIG. 13 is a diagram illustrating an example of an overall structure of a laser processing machine according to a second embodiment of the present invention.
[FIG. 14A] FIG. 14A is a diagram illustrating the content of control performed by a control unit for cutting processing of a workpiece by means of the processing machine main body of FIG. 13.
[FIG. 14B] FIG. 14B is a cross-sectional view along the IIB-IIB lines of FIG. 14A.
[FIG. 15A] FIG. 15A is a diagram illustrating the content of control performed by the control unit for cutting processing of the workpiece by means of the processing machine main body of FIG. 1.
[FIG. 15B] FIG. 15B is a cross-sectional view along the IIIB-IIIB lines of FIG. 15A.
[FIG. 16A] FIG. 16A is a diagram illustrating the content of control performed by the control unit for cutting processing of the workpiece by means of the processing machine main body of FIG. 13.
[FIG. 16B] FIG. 16B is a cross-sectional view along the IVB-IVB lines of FIG. 16A.
[FIG. 17A] FIG. 17A is a diagram illustrating the content of control performed by the control unit for cutting processing of the workpiece by means of the processing machine main body of FIG. 13.
[FIG. 17B] FIG. 17B is a cross-sectional view along the VB-VB lines of FIG. 17A.
[FIG. 18] FIG. 18 is a diagram illustrating a configuration example of a tool locus control unit of FIG. 13.
[FIG. 19A] FIG. 19A is a diagram illustrating an example of drag lines generated on a cutting surface of the workpiece in cutting processing of the workpiece by means of a laser beam in a second embodiment of the present invention.
[FIG. 19B] FIG. 19B is a diagram illustrating an example of meltdown generated on the cutting surface of an edge portion of an outer corner of the workpiece in the cutting processing of the workpiece by means of a laser beam in the second embodiment of the present invention.
[FIG. 20] FIG. 20 is a diagram illustrating an example of the cutting surface of the edge portion when the cutting processing of the workpiece by means of a laser beam is stopped once at the vertex of the edge portion of the outer corner of the workpiece and resumed, in the second embodiment of the present invention.
[FIG. 21] FIG. 21 is a diagram illustrating an example of a movement locus of a laser beam when moving an irradiation position of the laser beam in a loop-like shape on the workpiece to cut the edge portion of the outer corner of a final processed product.
[FIG. 22A] FIG. 22A is a diagram illustrating a distribution of heat input at a portion of the workpiece irradiated with a laser beam.
[FIG. 22B] FIG. 22B is a diagram illustrating a distribution of heat input at a portion where the laser beam moves by straddling a kerf already formed in the workpiece.
[FIG. 22C] FIG. 22C is a diagram illustrating a distribution of heat input at a portion where the laser beam moves at low speed and low output by straddling a kerf already formed in the workpiece.
[FIG. 23A] FIG. 23A is a diagram illustrating an example of a cutting surface formed on the workpiece by means of a laser beam, which has passed through a loop portion of FIG. 21 and passed through a step-over portion which steps over the front side and the other side of the kerf already formed in the workpiece.
[FIG. 23B] FIG. 23B is a perspective view illustrating the cutting surface of FIG. 23A together with an example of a cutting surface formed on the workpiece by means of a laser beam before passing through the loop portion.
[FIG. 24] FIG. 24 is a diagram illustrating an example of a concave portion formed in a cutting surface of a next side, when cutting processing of the workpiece by means of a laser beam is returned from low speed and low output to a normal processing condition at the step-over portion.
[FIG. 25] FIG. 25 is a flowchart illustrating an example of processing procedures performed by the NC device of FIG. 13.

### [DESCRIPTION OF EMBODIMENTS]

Hereinafter, embodiments of the present invention will be described with reference to the drawings. The same reference numerals are given to the same or equivalent parts or components throughout the respective drawings.

The embodiments described below exemplify devices and the like for embodying the technical ideas of the present invention. The technical ideas of the present invention do not specify the material, shape, structure, arrangement, function, and the like of each component as follows.

### [First embodiment]

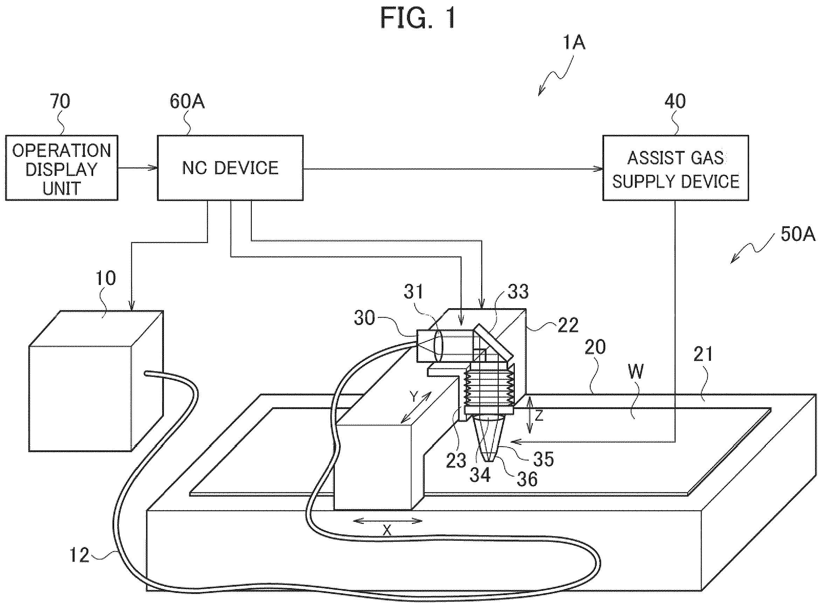

Hereinafter, a laser processing method and a laser processing machine according to a first embodiment of the present invention will be described with reference to the drawings. FIG. 1 is a diagram illustrating an example of an overall structure of a laser processing machine 1A according to the first embodiment of the present invention. In FIG. 1, the laser processing machine 1A is a processing machine that performs cutting processing of a workpiece W by means of a laser beam. The workpiece W to be processed is, for example, a mild steel plate. The workpiece W to be processed may be an iron-based sheet metal other than a mild steel plate, such as stainless steel, or a sheet metal, such as aluminum, aluminum alloy, or copper steel.

As illustrated in FIG. 1, the laser processing machine 1A includes a laser oscillator 10, a process fiber 12, a laser processing unit 20, and an assist gas supply device 40. The laser oscillator 10, the process fiber 12, the laser processing unit 20, and the assist gas supply device 40 constitute a processing machine main body 50A. The laser processing machine 1A also includes an NC (numerical control) device 60A as a control unit, and an operation display unit 70.

The laser oscillator 10 generates and emits a laser beam. As the laser oscillator 10, a laser oscillator which emits a laser beam having a predetermined wavelength by amplifying the excitation light emitted from a laser diode, or a laser oscillator which directly utilizes a laser beam emitted from a laser diode is suitable. The laser oscillator 10 is, for example, a solid-state laser oscillator, a fiber laser oscillator, a disk laser oscillator, and a direct diode laser oscillator (DDL oscillator). In addition to a laser diode as a medium, a carbon dioxide laser using carbon dioxide as a medium can also be used for the laser oscillator 10.

The carbon dioxide laser and the laser diode beam have a large difference in wavelength. The laser wavelength of the carbon dioxide laser is in the 10 µm band (typically wavelength of 10600 nm). In contrast, the laser wavelength of the laser diode beam is less than 1 µm band. The specific laser wavelength of the laser diode beam, for example, the specific laser wavelength of a laser beam emitted by a fiber laser oscillator or a disk laser oscillator is typically 1060 nm to 1080 nm. The laser wavelength of a laser beam emitted by a DDL oscillator is in any range of 300 nm to 1000 nm.

Due to the difference in wavelength between the carbon dioxide laser and the laser diode beam, the absorptivity (or reflectivity) of the laser beam to the workpiece W to be processed differs greatly between the carbon dioxide laser and the laser diode beam. Due to the difference in absorptivity, the behavior of reflection and absorption of the laser beam in a kerf and the behavior of heat conduction after absorption are different between the carbon dioxide laser and the laser diode beam, in the lower surface side of the workpiece W.

Although an incidence angle of the laser diode beam is smaller than that of the carbon dioxide laser, regarding an absorption ratio of the laser beam to the workpiece W, the laser diode beam is higher than the carbon dioxide laser, and thus the laser diode beam is more likely to melt the workpiece W than the carbon dioxide laser. Due to the difference in the absorption ratio, the possibility of an excessive meltdown of the workpiece W on the lower surface side is higher when using the laser diode beam in comparison with the carbon dioxide laser.

The laser processing method using the laser processing machine 1A of the first embodiment is effective in suppressing an excessive meltdown of the workpiece W on the lower surface side. Needless to say, it is meaningful to use the laser processing method using the laser processing machine 1A of the first embodiment when using a laser diode beam with which the possibility of an excessive meltdown of the workpiece W is high on the lower surface side in cutting processing of the workpiece W. It is also meaningful to use the laser processing method using the laser processing machine 1A of the first embodiment when using a carbon dioxide laser with which there is still some possibility of an excessive meltdown of the workpiece W on the lower surface side in cutting processing of the workpiece W. From the circumstances described above, the laser oscillator 10 may be a carbon dioxide laser.

The process fiber 12 transmits a laser beam emitted from the laser oscillator 10 to the laser processing unit 20.

The laser processing unit 20 cuts the workpiece W by using a laser beam transmitted by the process fiber 12. The laser processing unit 20 has a processing table 21 on which the workpiece W is mounted, a gate type X-axis carriage 22, a Y-axis carriage 23, and a collimator unit 30. The X-axis carriage 22 is configured to move freely on the processing table 21 along the X-axis direction. The Y-axis carriage 23 is configured to move freely on the X-axis carriage 22 along the Y-axis direction perpendicular to the X-axis.

The collimator unit 30 irradiates the workpiece W with a laser beam transmitted by the process fiber 12. The collimator unit 30 has a collimator lens 31 into which the laser beam emitted from the emission end of the process fiber 12 is injected, and a bend mirror 33 that reflects the laser beam emitted from the collimator lens 31 downward in the Z-axis direction perpendicular to the X-axis and Y-axis. In addition, the collimator unit 30 has a focusing lens 34 for focusing the laser beam reflected from the bend mirror 33. The collimator lens 31, the bend mirror 33 and the focusing lens 34 are arranged in a state in which the optical axis is adjusted in advance.

The collimator unit 30 has a processing head 35 for emitting a laser beam onto the workpiece W. A nozzle 36 for emitting a laser beam is detachably attached to the tip edge of the processing head 35. A circular opening is provided at the tip edge of the nozzle 36, and the laser beam focused by the focusing lens 34 is radiated onto the workpiece W through the opening at the tip edge of the nozzle 36.

The collimator unit 30 is fixed to the Y-axis carriage 23 movable in the Y-axis direction, and the Y-axis carriage 23 is provided to the X-axis carriage 22 movable in the X-axis direction. Thus, the processing machine main body 50A can move the processing head 35, that is, the position where the laser beam is radiated onto the workpiece W, along the surface of the workpiece W (X-axis direction and Y-axis direction). The processing machine main body 50A may be configured to move the workpiece W while keeping the position of the processing head 35 fixed, instead of the configuration in which the processing machine main body 50A moves the processing head 35 along the surface of the workpiece W. It is sufficient that the processing machine main body 50A is configured to move the processing head 35 relative to the surface of the workpiece W.

The assist gas supply device 40 supplies an assist gas of oxygen to the processing head 35. The assist gas may be a gas mixture of nitrogen and oxygen, or air. The assist gas may be provided as long as its purpose is to utilize at least heat of oxidation reaction, and a mixing ratio of nitrogen and oxygen may be arbitrarily set. When the workpiece W is processed, the assist gas is blown onto the workpiece W through the opening of the nozzle 36. The assist gas discharges the molten metal within the kerf width in which the workpiece W is melted.

In the laser processing machine 1A configured as described above, the workpiece W is cut by the laser beam emitted from the processing head 35, thereby producing a part having a predetermined shape.

The NC device 60A is a control device for controlling each unit of the laser processing machine 1A. The NC device 60A is configured of a computer, and has a CPU (central processing unit), a ROM (read-only memory) and a RAM (random-access memory). The operation display unit 70 is connected to the NC device 60A.

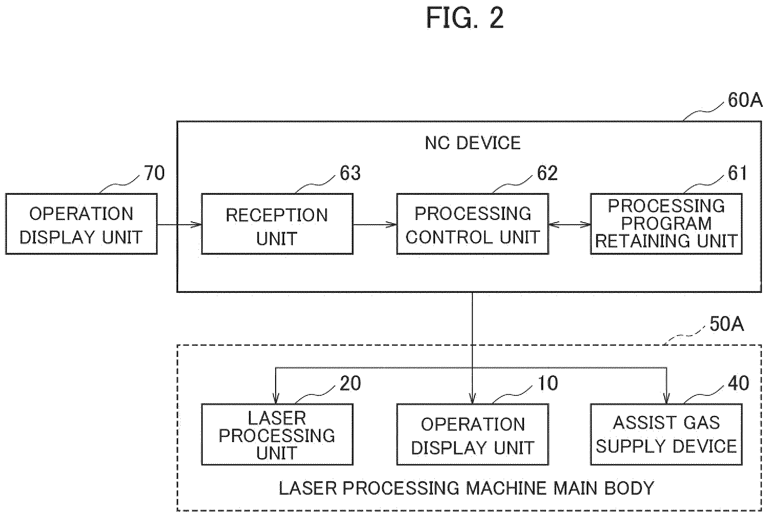

The NC device 60A realizes various functions by means of the CPU reading various programs from the ROM, expanding such programs to the RAM, and executing the expanded programs. FIG. 2 is a block diagram for explaining the NC device 60A according to the first embodiment of the present invention. As illustrated in FIG. 2, the NC device 60A functions as a processing program retaining unit 61, a processing control unit 62, and a reception unit 63.

The processing program retaining unit 61 retains a processing program. The processing program retained by the processing program retaining unit 61 is created by an external device such as a CAM (computer-aided manufacturing). The processing program retaining unit 61 acquires the processing program from the external device. The external device may store the created processing program in a database of a data management server (not illustrated). In this case, the processing program retaining unit 61 acquires the processing program by reading the processing program stored in the database of the data management server.

The processing program includes a code for defining the operation of the processing machine main body 50A that is necessary to produce a part by sequentially cutting the workpiece W along a plurality of paths.

The processing program includes a code for defining a series of operations of the processing machine main body 50A necessary to produce a part, such as setting a processing condition, starting and stopping emission of a laser beam, moving the machine head 35 for each element, and moving from path to path. When producing a part, the processing machine main body 50A cuts the part from the workpiece W by moving the machine head 35 (laser beam) along the cutting path locus which is the inner and outer periphery of the part. When cutting a plurality of parts from the workpiece W, a code is described for each of the plurality of parts in the processing program.

In the first embodiment, the processing machine main body 50A starts to emit a laser beam at the cutting start point, moves the processing head 35 along the cutting processing locus, and stops emitting the laser beam at the cutting end point.

The processing control unit 62 performs a processing program to control the processing machine main body 50A. In the first embodiment, the processing control unit 62 performs edge processing at the corner portion of the part (hereinafter, referred to as an edge portion). The details of the edge processing will be described later.

The reception unit 63 receives a request relating to the processing from an operator. The reception unit 63 displays a screen for receiving a request relating to the processing from the operator on an operation display unit 70. The reception unit 63 transmits information for performing a request received from the operator to the processing control unit 62.

The operation display unit 70 displays a screen necessary for the operator to input information to the NC device 60A. The operation display unit 70 is operated by the operator so as to input information to the NC device 60A. The operator can input various information relating to the edge processing to the NC device 60A by operating the operation display unit 70. The operation display unit 70 transmits the information relating to the edge processing input from the operator, to the NC device 60A. The operation display unit 70 transmits the information relating to the edge processing input from the operator, to the reception unit 63.

The operation display unit 70 is, for example, a touch panel which are mounted on a liquid crystal panel and capable of performing an input operation in accordance with the information displayed on the liquid crystal panel. The operation display unit 70 may have a display unit and an operation unit separately.

### (Edge processing)

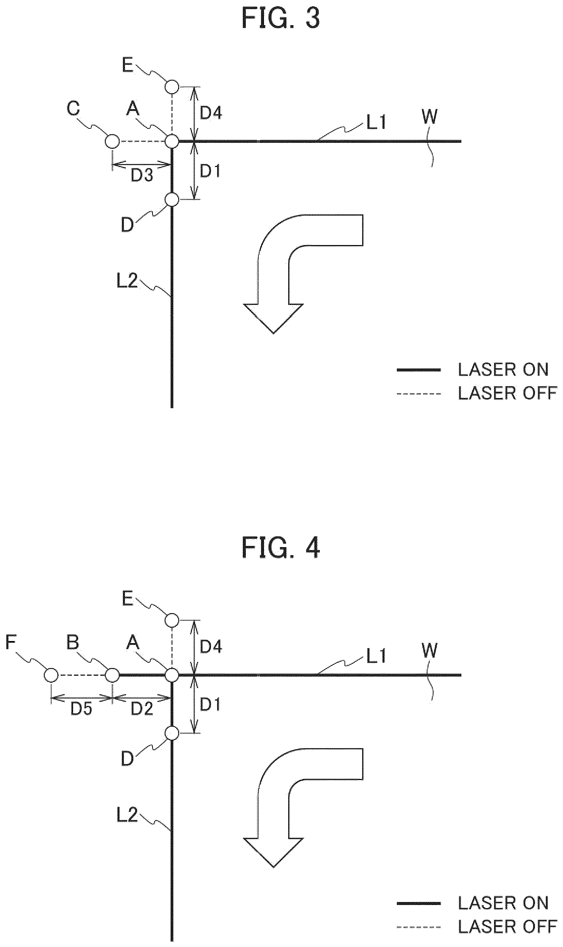

Referring to FIGS. 3 and 4, the edge processing in the processing method of the laser processing machine 1A according to the first embodiment will be described. FIG. 3 is a diagram for explaining processing at the edge portion of the cutout of the laser processing machine according to the first embodiment of the present invention. FIG. 4 is a diagram for explaining processing at the edge portion of the outer corner of the laser processing machine 1A according to the first embodiment of the present invention.

The processing machine main body 50A of the laser processing machine 1A performs cutting processing of the workpiece W by moving the processing head 35 relatively that emits the laser beam toward the workpiece W along a cutting processing locus having a first side L1, a second side L2, and an edge portion A where the first side L1 and the second side L2 intersect with each other. The laser processing machine 1A moves the processing head 35 to the edge portion A along the first side L1 without decelerating while emitting the laser beam. The processing machine main body 50A stops emitting the laser beam after the processing head 35 moving along the first side L1 reaches the edge portion A. While emitting the laser beam intermittently, the processing machine main body 50A moves the processing head 35 from the edge portion A to a first predetermined position (position D) separated by a first predetermined distance (distance D1) along the second side L2. When the processing head 35 reaches the first predetermined position, the processing machine main body 50A stops emitting the laser beam and moving the processing head 35. In a state where the emission of the laser beam is stopped, the processing machine main body 50A moves the processing head 35 to a position (position E) that is on the extension line of the second side L2 and before the edge portion A, and then accelerates the processing head 35 toward the edge portion A. When the processing head 35 accelerating toward the edge portion A reaches the edge portion A, the laser processing machine 1A starts to emit the laser beam, and moves the processing head 35 along the second side L2. The processing machine main body 50A is controlled by the NC device 60A.

First, the details of the edge processing at the edge portion A of the cutout will be described with reference to FIG. 3. In FIG. 3, the edge portion A is the edge portion of the cutout on the cutting processing locus, and the laser processing machine 1A stops emitting a laser beam after the processing head 35 moving along the first side L1 reaches the edge portion A. This includes that the laser processing machine 1A stops emitting the laser beam when the processing head 35 moving along the first side L1 reaches the edge portion A.

At the edge portion A of the cutout, the processing machine main body 50A moves the processing head 35 to the edge portion A along the first side L1 without decelerating while emitting the laser beam. The processing machine main body 50A stops emitting the laser beam when the processing head 35 moving along the first side L1 reaches the edge portion A. That is, the processing machine main body 50A performs cutting processing up to the edge portion A while maintaining the speed when cutting the first side L1 without decelerating, and stops the laser beam when the processing head 35 reaches the edge portion A. This makes it possible to suppress instability of the cutting condition caused by decelerating the processing head before reaching the edge portion A, thereby suppressing a meltdown of the edge portion A. In addition, since emission of the laser beam is stopped at the edge portion A, the present embodiment can be applied to the corner portion of the cutout. It is possible to reduce a cutting range of a workpiece, thereby suppressing a decrease in a usage rate.

The processing machine main body 50A decelerates the processing head 35 from the edge portion A in a state where the emission of the laser beam is stopped, and stops moving the processing head 35 at a position C separated from the edge portion A by a distance D3 along the extension line of the first side L1. The distance D3 is set to about 1.0 mm, for example. The length of the distance D3 is not particularly limited as long as it is long enough to deaccelerate the processing head 35 sufficiently from the edge portion A.

The processing machine main body 50A moves the processing head 35 from the position C to the edge portion A along the extension line of the first side in a state where the emission of the laser beam is stopped. The path for moving the processing head 35 from the position C to the edge portion A is not limited thereto. The processing machine main body 50A may move the processing head 35 from the position C to the position E that is on the extension line of the second side L2 and before the edge portion A in a state where the emission of the laser beam is stopped, and then move the processing head 35 from the position E to the edge portion A. In this case, the processing machine main body 50A may move the processing head 35 from the position C to the position E along a linear path in a state where the emission of the laser beam is stopped, and then move the processing head 35 from the position E to the edge portion A. Further, the processing machine main body 50A may move the machine head 35 from the position C to the position E along an arc-shaped path in a state where the emission of the laser beam is stopped, and then move the machine head 35 from the position E to the edge portion A.

When the machine head 35 reaches the edge portion A from the position C, the processing machine main body 50A emits a pulsed laser beam. The processing machine main body 50A moves the machine head 35 from the edge portion A to the position D separated by the distance D1 along the second side L2 while emitting the pulsed laser beam. When the machine head 35 reaches the position D, the processing machine main body 50A stops emitting the laser beam, and stops moving the machine head 35. That is, a cut is made from the edge portion A by a predetermined distance along the second side L2 by means of the pulsed laser beam. By making a cut by means of the pulsed laser beam, when cutting processing starts from the edge portion A along the second side L2, it is possible to suppress overburning caused by the accumulation of the heat in the vicinity of the already cut first side L1, thereby suppressing the formation of a concave portion in the cutting side surface.

The distance D1 is set to a length such that a meltdown can be suppressed on the lower surface of the cutting surface in cutting processing, and for example, is set to about 1.0 mm. For example, the distance D1 is set based on the material of the workpiece W. The distance D1 is set to a range of 0.6 to 1.1 mm, for example, when the workpiece W is an electric furnace material. The distance D1 is set to a range of 0.6 to 1.0 mm, for example, when the workpiece W is a blast furnace material. In the laser processing machine 1A, the distance D1 at which a cut is made from the edge portion A along the second side L2 by means of a pulsed laser beam can be set to a value most suitable for the material, thereby further improving the quality of the edge portion A.

The processing machine main body 50A moves the processing head 35 from the position D to the position E that is on the extension line of the second side L2 and before the edge portion A in a state where the emission of the laser beam is stopped, and then accelerates the processing head 35 toward the edge portion A. The position E is the position separated from the edge portion A by a distance D4 on the extension line of the second side L2. The distance D4 is set to about 1.0 mm, for example. The length of the distance D4 is not particularly limited as long as it is long enough to accelerate the processing head 35 to a constant speed between the position D and the edge portion A during the cutting operation.

The processing machine main body 50A starts to emit a laser beam, when the processing head 35 accelerating from the position E toward the edge portion A reaches the edge portion A, and the processing machine main body 50A moves the processing head 35 along the second side L2, and starts cutting processing of the second side L2. By accelerating the processing head 35 from the position E before the edge portion A and starting the cutting processing of the second side from the edge portion A at normal cutting speed, it becomes possible to suppress instability of the cutting condition, thereby suppressing a meltdown of the edge portion A. The processing machine main body 50A repeats the same processing at the edge portion of the cutout on the cutting processing locus until the processing head 35 reaches the cutting end point to finish the cutting processing.

Next, the details of the edge processing at the edge portion A of the outer corner will be described with reference to FIG. 4. In FIG. 4, the edge portion A is the edge portion of the outer corner on the cutting processing locus, and the laser processing machine 1A stops emitting the laser beam after the processing head 35 moving along the first side L1 reaches the edge portion A. This includes that, after the processing head 35 moving along the first side L1 reaches the edge portion A, the laser processing machine 1A moves the processing head 35 from the edge portion A to the second predetermined position (position B) separated by the second predetermined distance (distance D2) along the extension line of the first side L1 while emitting the laser beam, and stops emitting the laser beam when the processing head 35 reaches the second predetermined position **B.**

At the edge portion A of the outer corner, the processing machine main body 50A moves the processing head 35 to the edge portion A along the first side L1 without decelerating while emitting the laser beam. After the processing head 35 moving along the first side L1 reaches the edge portion A, the processing machine main body 50A moves the processing head 35 from the edge portion A to the position B separated by the distance D2 along the extension line of the first side L1 while emitting the laser beam. When the processing head 35 reaches the position B, the processing machine main body 50A stops emitting the laser beam. That is, at the edge portion A of the outer corner, the processing machine main body 50A makes a cut from the edge portion A by the distance D2 along the extension line of the first side L1.

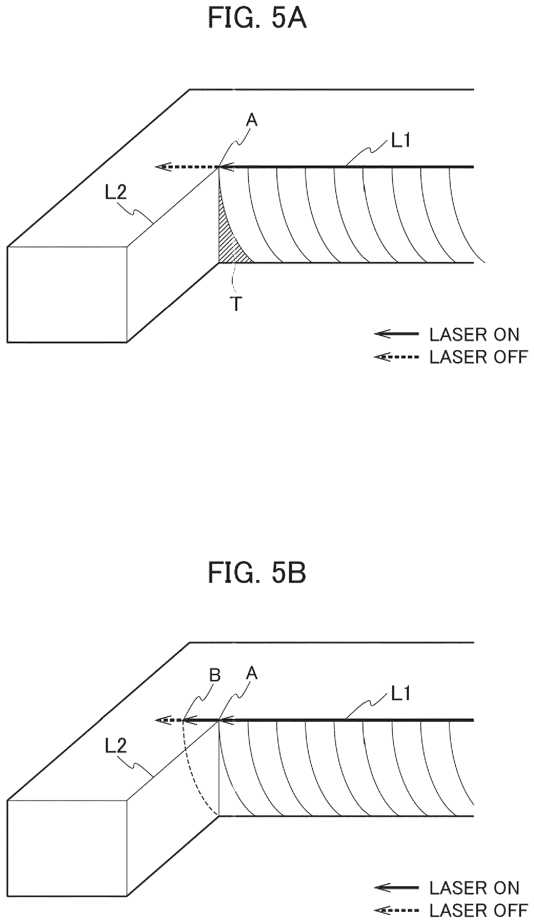

The significance of making a cut from the edge portion A along the extension line of the first side L1 will now be described with reference to FIGS. 5A and 5B. FIG. 5A is a schematic diagram of a processed cross-section in laser processing in a case where no cut is made from the edge portion A in the first embodiment of the present invention. When the laser processing machine 1A cuts and processes the thick workpiece W, as illustrated in FIG. 5A, a cutting front is formed on the cutting surface of the workpiece W. In a case where the emission of the laser beam is stopped when the processing head 35 reaches the edge portion A, that is, when no cut is made from the edge portion A, the cutting front remains in the region T, and the lower surface of the cutting surface melts off at the edge portion A in some cases.

FIG. 5B is a schematic diagram of a processed cross-section in laser processing in a case where a cut is made from the edge portion A in the first embodiment of the present invention. As illustrated in FIG. 5B, the processing machine main body 50A moves the processing head 35 from the edge portion A to the position B while emitting a laser beam, after the processing head 35 reaches the edge portion A. In a case where the emission of the laser beam is stopped when the processing head 35 reaches the edge portion B, that is, when a cut is made from the edge portion A, the laser beam passes through the edge portion A in an ON-state. For this reason, the cutting front does not remain on the cutting surface, thereby suppressing a meltdown of the lower surface of the cutting surface at the edge portion A.

The distance D2 in FIG. 4 is set to a length such that a meltdown can be suppressed on the lower surface of the cutting surface in cutting processing, and is set to about 1.0 mm, for example. The distance D2 may be set based on the material of the workpiece W. The distance D2 may be set to 0.1 mm or more, for example, when the workpiece W is an electric furnace material. The distance D2 may be set to 1.0 mm or more, for example, when the workpiece W is a blast furnace material. In the the laser processing machine 1A, the distance D2 at which a cut is made from the edge portion A along the first side L1 can be set to a value most suitable for the material, thereby further improving the quality of the edge portion A.

The processing machine main body 50A decelerates the machine head 35 from the position B in a state where the emission of the laser beam is stopped, and stops moving the machine head 35 at the position F further separated from the position B by a distance D5 along the extension line of the first side L1. The distance D5 is set to about 1.0 mm, for example. The length of the distance D5 is not particularly limited as long as it is long enough to deaccelerate the processing head 35 from the edge portion A.

The processing machine main body 50A moves the processing head 35 from the position F to the edge portion A along the extension line of the first side in a state where the emission of the laser beam is stopped. The path for moving the processing head 35 from the position F to the edge portion A is not limited to thereto. The processing machine main body 50A may move the processing head 35 from the position F to the position E in a state where the emission of the laser beam is stopped, and then move the processing head 35 from the position E to the edge portion A. In this case, the processing machine main body 50A may move the processing head 35 from the position F to the position E along a linear path in a state where the emission of the laser beam is stopped, and then move the processing head 35 from the position E to the edge portion A. Further, the processing machine main body 50A may move the processing head 35 from the position F to the position E along an arc-shaped path in a state where the emission of the laser beam is stopped, and then move the processing head 35 from the position E to the edge portion A. The processing that follows after the processing head 35 is moved from the position F to the edge portion A is the same as the edge processing at the edge portion A of the cutout, and thus a description thereof will be omitted.

As described in the edge processing at the edge portion A of the cutout, the processing machine main body 50A makes a cut from the edge portion A along the second side L2 by means of a pulsed laser beam, thereby acquiring the effect that suppresses a concave portion to be formed in the cutting side surface at the edge portion A. For this reason, the processing machine main body 50A performs the same edge processing as the edge portion A of the cutout even at the edge portion A of the outer corner, and does not have to make a cut along the extension line of the first side L1 from the edge portion A. That is, the processing machine main body 50A may stop emitting the laser beam when the processing head 35 moving along the first side L1 reaches the edge portion A. In addition, the processing machine main body 50A may decelerate the processing head 35 from the edge portion A in a state where the emission of the laser beam is stopped, and stop moving the processing head 35 at the position C separated from the edge portion A by the distance D3 along the extension line of the first side L1.

### (Method of realizing edge processing)

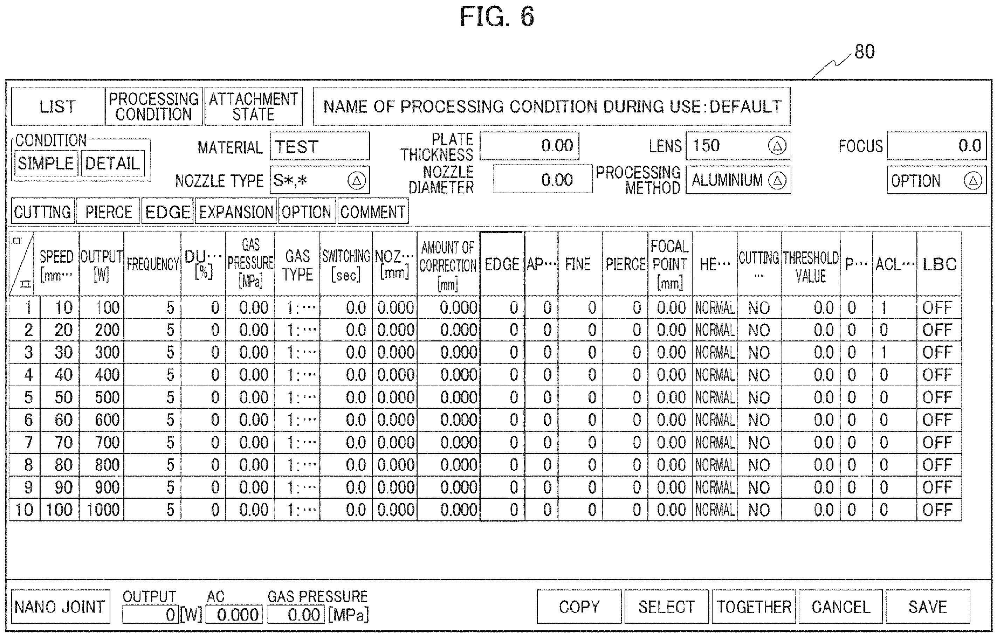

Next, a specific method of realizing edge processing will be described with reference to FIGS. 6 to 8. In the laser processing machine 1A of the first embodiment, the NC device 60A receives a request for edge processing from an operator before starting cutting processing, thereby performing the edge processing. FIG. 6 is a diagram for explaining a cutting condition screen in which an operator inputs a request for edge processing in the first embodiment of the present invention. The reception unit 63 displays a cutting condition screen 80, as illustrated in FIG. 6, before starting cutting processing. The cutting condition screen 80 includes an edge processing setting unit 81 for setting an edge processing condition. The edge processing setting unit 81 can receive a request for setting edge processing from an operator. The operator can input a request for setting edge processing to the NC device 60A by selecting the edge processing setting unit 81.

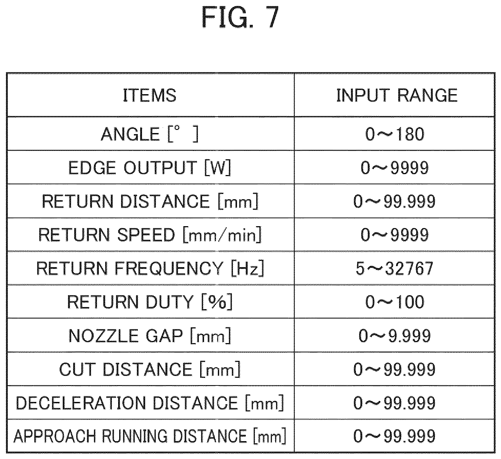

When the operator selects the edge processing setting unit 81, that is, when the reception unit 63 receives a request for setting edge processing, the reception unit 63 displays an edge processing setting screen (not illustrated). On the edge processing setting screen, the reception unit 63 displays setting items required for edge processing as illustrated in FIG. 7, for example. FIG. 7 is a diagram for explaining the setting items for edge processing in the first embodiment of the present invention. Examples of the setting items required for the edge processing include "angle", "edge output", "return distance", "return speed", "return frequency", "return duty", "nozzle gap", "cut distance", "deceleration distance", and "approach running distance".

Each of the setting items will be described below.

"Angle" is the maximum angle of the edge portion to which the edge processing is applied, and the input range is set to 0 to 180°. "Angle" is set to, for example, 140°.

"Edge output" is the output value of the laser beam when moving the processing head 35 from the edge portion A to the position D separated by the distance D1 along the second side L2 while emitting a pulsed laser beam. The input range of "edge output" is set to 0 to 9999 W. "Edge output" is set to the same output value as when cutting the first side L1, for example.

"Return distance" is the distance D1 acquired when moving the processing head 35 from the edge portion A to the position D separated by the distance D1 along the second side L2 while emitting a pulsed laser beam. The input range of "return distance" is set to 0 to 99.9 mm. "Return distance" is set to, for example, 1.0 mm.

"Return speed" is the moving speed of the processing head 35 when moving the processing head 35 from the edge portion A to the position D separated by the distance D1 along the second side L2 while emitting a pulsed laser beam. The input range of "return speed " is set to 0 to 9999 mm/min. "Return speed " is set to, for example, 500 to 1000 mm/min.

"Return frequency" is the frequency of the laser beam when moving the processing head 35 from the edge portion A to the position D separated by the distance D1 along the second side L2 while emitting a pulsed laser beam. The input range of "return frequency" is set to 5 to 32767 Hz. "Return frequency" is set to, for example, 10 Hz.

"Return duty" is the ratio of the laser beam ON time per 1 pulse time when moving the processing head 35 from the edge portion A to the position D separated by the distance D1 along the second side L2 while emitting a pulsed laser beam. The input range of "return duty" is set to 0 to 100%. "Return duty" is set to 15 to 30%, for example.

"Nozzle gap" is the distance between the surface of the workpiece W and the tip edge of the nozzle 36 when performing edge processing at the edge portion A, and the input range of "nozzle gap" is set to 0 to 9.999 mm. "Nozzle gap" is set to the same distance as when cutting the first side L1, for example.

"Cut distance" is the distance D2 acquired when moving the processing head 35 from the edge portion A to the position B separated by the distance D2 along the extension line of the first side L1 while emitting a laser beam, after the processing head 35 moving along the first side L1 reaches the edge portion A. The input range of "cut distance" is set to 0 to 99.999 mm. "Cut distance" is set to, for example, 1.0 mm.

"Deceleration distance" is the distance D5 acquired when the processing head 35 is decelerated from the position B in a state where the emission of the laser beam is stopped, and the movement of the processing head 35 is stopped at the position F separated from the position B by the distance D5 along the extension line of the first side L1. The input range of "deceleration distance" is set to 0 to 99.999 mm. "Deceleration distance" is set to, for example, 1.0 mm.

"Approach running distance" is the distance D4 acquired when moving the processing head 35 from the position D to the position E separated from the edge portion A by the distance D4 along the extension line of the second side L2 in a state where the emission of the laser beam is stopped. The input range of "approach running distance" is set to 0 to 99.999 mm. "Approach running distance" is set to, for example, 1.0 mm.

In the edge processing setting screen, a setting value of each setting item relating to edge processing is received from the operator. By receiving an edge condition No from the operator, a numerical value of each setting item set in advance corresponding to the edge condition No may be applied to the edge processing setting screen. Further, a numerical value registered in advance in the macro variable on the NC device may be applied to "cut distance", "deceleration distance", and "approach running distance". The NC device 60A performs the edge processing, based on the setting values of the setting items required for the received edge processing. The NC device 60A adds the coordinates and the command codes required for the operation of the edge processing to the processing program, based on the setting values of the setting items required for the edge processing, thereby performing the cutting processing.

### (Modified example)

In the above description, the NC device 60A has performed the edge processing based on the setting values of the setting items required for the edge processing input by the operator. However, since there are many setting items, many coordinates and codes required for the operation of the edge processing are added, thereby complicating the control of the edge processing. For this reason, a processing program for performing the edge processing may be prepared in advance by an external device such as a CAM, and be output to the NC device 60A to realize the edge processing.

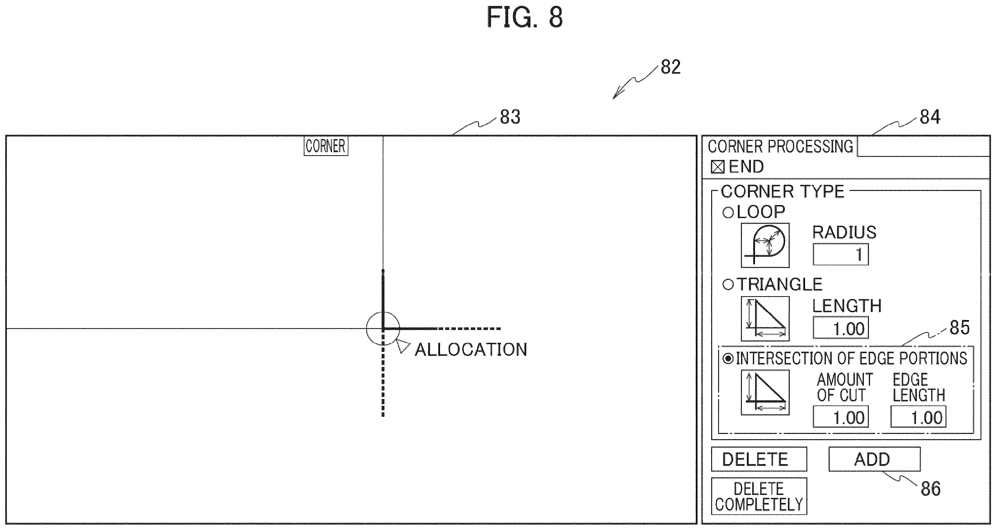

FIG. 8 is a diagram for explaining a part editing screen 82 for setting edge processing on the CAM in the first embodiment of the present invention. The part editing screen 82 displays a cutting processing locus for a part to be cut using a processing program. By allowing the CAM to retain information on an angle for operating the edge processing in advance, the part editing screen 82 enables the selection of an edge portion subjected to the edge processing from the cutting processing locus of a part. The part editing screen 82 includes an edge portion selection unit 83 for selecting an edge portion subjected to the edge processing from the cutting processing locus of a part, and a corner processing selection unit 84 for selecting a type of processing at the edge portion. For example, an operator selects "intersection of edge portions" in the corner processing selection unit 84, sets "amount of cut" and "edge length" in an edge processing setting unit 85, and presses an addition button 86, and thus coordinates and command codes required for the edge processing are added to the processing program for cutting and processing a part. The processing program to which the coordinates and command codes required for the edge processing are added is output to the NC device 60A.

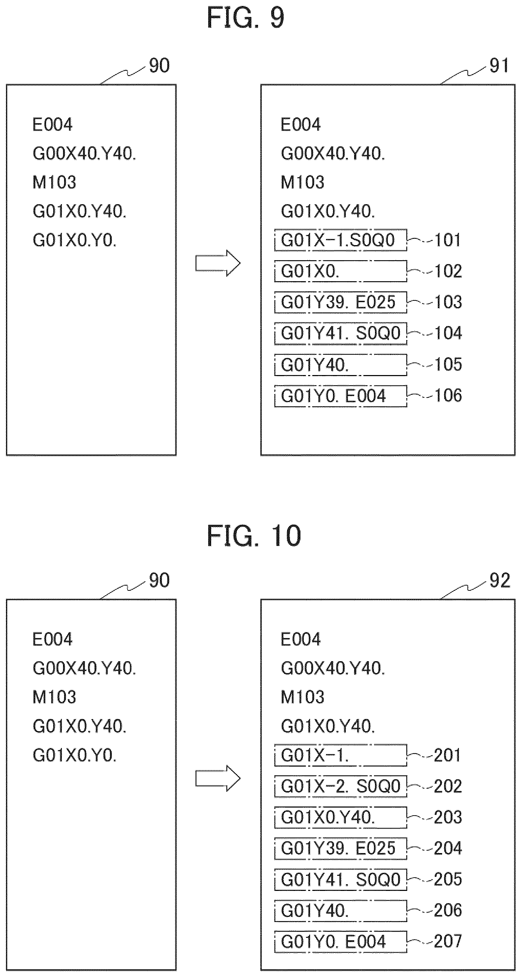

Hereinafter, with reference to FIGS. 9 and 10, an example of the processing program will be described to which coordinates and command codes required for edge processing are added. The processing program of FIGS. 9 and 10 is a G code for cutting and processing a square part of 40 mm × 40 mm. The G code 90 of FIGS. 9 and 10 is a conventional G code for cutting and processing a square part of 40 mm × 40 mm before setting the edge processing.

When the edge processing is desired to be performed in the upper left edge portion A of the square part, the operator selects the upper left edge portion A in the edge portion selection unit 83 of the part editing screen 82. Next, the operator selects "intersection of edge portions" in the corner processing selection unit 84, and sets "amount of cut" and "edge length" in the edge processing setting unit 85.

When the edge portion A is a corner portion of a cutout, the operator sets "amount of cut" to 0 and "edge length" to 1.0 mm, for example. When the operator presses the addition button 86, a G code 91 is created in which the coordinates and command codes 101 to 106 for performing the edge processing at the edge portion A are added to the conventional G code 90.

FIG. 9 is a diagram illustrating the content of a processing program when performing edge processing of the edge portion of the cutout in the first embodiment of the present invention. In FIG. 9, the code 101 is a code which commands to deaccelerate a laser beam by stopping emitting the laser beam and move the processing head 35 to the position C separated from the edge portion A by 1.0 mm along the extension line of the first side L1. The code 102 is a code which commands to move the processing head 35 to the edge portion A. The code 103 is a code which calls the preset processing condition E025 and commands to move the processing head 35 to the position D separated from the edge portion A by 1.0 mm along the second side L2 while emitting the pulsed laser beam. The code 104 is a code which commands to stop emitting the laser beam and move the processing head 35 to the position E separated from the edge portion A by 1.0 mm on the extension line of the second side L2. The code 105 is a code which commands to move the processing head 35 to the edge portion A. The code 106 is a code which commands to start to emit the laser beam and move the processing head 35 to the next edge portion along the second side L2.

Meanwhile, when the edge portion A is an outer corner, for example, the operator sets "amount of cut" to 1.0 mm, and "edge length" to 1.0 mm. When the operator presses the addition button 86, the G code 91 is created in which the coordinates and command codes 201 to 207 for performing the edge processing at the edge portion A are added to the conventional G code 90.

FIG. 10 is a diagram illustrating the content of a processing program when performing edge processing of the edge portion of the outer corner in the first embodiment of the present invention. In FIG. 10, the code 201 is a code which commands to move the processing head 35 to the position B separated from the edge portion A by 1.0 mm along the extension line of the first side L1 while emitting a laser beam. The code 202 is a code which commands to deaccelerate the laser beam by stopping emitting the laser beam and move the processing head 35 to the position F separated from the position B by 1.0 mm along the extension line of the first side L1. The code 203 is a code which commands to move the processing head 35 to the edge portion A. The code 204 is a code which calls the preset processing condition E025 and commands to move the processing head 35 to the position D separated from the edge portion A by 1.0 mm along the second side L2 while emitting the pulsed laser beam. The code 205 is a code which commands to stop emitting the laser beam and move the processing head 35 to the position E separated from the edge portion A by 1.0 mm on the extension line of the second side L2. The code 206 is a code which commands to move the processing head 35 to the edge portion A, and the code 207 is a code which commands to start to emit the laser beam and move the processing head 35 to the next edge portion along the second side L2.

The NC device 60A performs the processing program to which the coordinates and the command codes which perform the edge processing are added, thereby performing the edge processing at the edge portion.

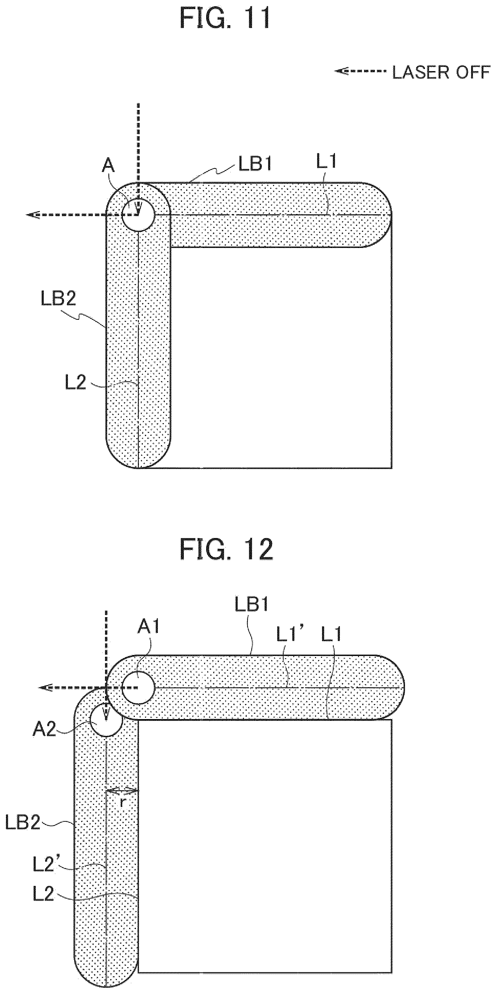

In the above description, the laser processing method of the laser processing machine 1A has been described on the premise that the cutting processing is performed along the cutting process locus. However, in the laser processing machine 1A of the first embodiment, a tool radius compensation for compensating a locus for moving the processing head 35 is performed in some cases, based on an irradiation radius r of the laser beam on the upper surface of the workpiece. FIGS. 11 and 12 are diagrams for explaining the tool radius compensation. In a case where the tool radius compensation is not performed, as illustrated in FIG. 11, when cutting the first side L1, the processing machine main body 50A moves the processing head 35 to the edge portion A along the first side L1 while emitting a laser beam LB1. The processing machine main body 50A then stops emitting the laser beam LB1 after the processing head 35 moving along the first side L1 reaches the edge portion A. Further, the processing machine main body 50A moves the processing head 35 to a position on the extension line of the second side L2 and before the edge portion A in a state where the emission of the laser beam is stopped, and then accelerates the processing head 35 toward the edge portion A. When the processing head 35 accelerating toward the edge portion A reaches the edge portion A, the processing machine main body 50A starts to emit a laser beam LB2, and moves the processing head 35 along the second side L2. That is, the position at which the emission of the laser beam LB1 is stopped after cutting the first side L1, and the position at which the emission of the laser beam LB2 is started when cutting the second side L2 are both at the edge portion A.

Meanwhile, in a case where the tool radius compensation is performed, as illustrated in FIG. 12, when cutting the first side L1, the processing machine main body 50A moves the processing head 35 along the path L1' shifted upward by a radius r from the first side L1 while emitting the laser beam LB1. The processing machine main body 50A moves the processing head 35 along the path L1' to the position A1, which is positioned above the edge portion A by the radius r. The processing machine main body 50A then stops emitting the laser beam LB1 after the processing head 35 moving along the path L1' reaches the position A1. That is, when cutting the first side L1, the processing machine main body 50A stops emitting the laser beam LB1 at the position A1, which is positioned above the edge portion A.

In addition, in a state where the emission of the laser beam is stopped, the processing machine main body 50A moves the machine head 35 to a position on the extension line of the path L2' shifted to the left by the radius r from the second side L2 and before the edge portion A, and then accelerates the machine head 35 toward the position A2 which is positioned to the left side by the radius r from the edge portion A. When the machine head 35 accelerating toward the position A2 reaches the position A2, the processing machine main body 50A starts to emit the laser beam LB2, and moves the machine head 35 along the path L2'. That is, when cutting the second side L2, the processing machine main body 50A starts to emit the laser beam LB2 at the position A2 in the back from the edge portion A. For this reason, the position A1 at which the laser beam LB1 is stopped after cutting the first side L1, and the position A2 at which the emission of the laser beam LB2 is started when cutting the second side L2 have a deviation of the radius r in the direction of the path L1' from the edge portion A, and a deviation of the radius r in the direction of the path L2' from the edge portion A.

Assuming that the edge processing is applied to the laser processing machine 1A performing the tool radius compensation as described above, and that a pulsed laser beam is started to be emitted at the position A2, thereby making a cut along the path L2' by a predetermined distance. In this case, the amount of heat in the vicinity of the edge portion A is insufficient, and the laser beam does not reach the lower surface of the workpiece W when making a cut, and then the heat is accumulated when cutting the second side L2, causing an explosion due to overburning in some cases. In other words, a processing defect may occur at the edge portion A. When the tool radius compensation is performed in the processing method of the laser processing machine 1A of the first embodiment, the processing machine main body 50A can eliminate the positional deviation between the position A1 and the position A2 by shifting the position A1 at which the emission of the laser beam LB1 is stopped to the left by the radius r in the direction of the path L1', and shifting the position A2 at which the emission of the laser beam LB2 is started upward by the radius r in the direction of the path L2', thereby suppressing the processing defect when performing the edge processing.

### (Operational effect of first embodiment)

As described above, according to the first embodiment of the present invention, the following operation effects can be acquired.

In the laser processing method and the laser processing machine 1A according to the first embodiment of the present invention, the laser processing machine 1A moves the processing head 35 to the corner portion (edge portion A) along the first side L1 without decelerating while emitting a laser beam, and stops emitting the laser beam after the processing head 35 moving along the first side L1 reaches the corner portion. While intermittently emitting the laser beam, the laser processing machine 1A according to the first embodiment moves the processing head 35 from the corner portion to the first predetermined position (position D) separated by the first predetermined distance (distance D1) along the second side L2, and stops emitting the laser beam and moving the processing head 35 when the processing head 35 reaches the first predetermined position. In a state where the emission of the laser beam is stopped, the laser processing machine 1A according to the first embodiment moves the processing head 35 to the position E on the extension line of the second side L2 and before the corner portion, and then accelerates the processing head 35 toward the corner portion, and when the processing head 35 accelerating toward the corner portion reaches the corner portion, the laser processing machine 1A according to the first embodiment starts to emit the laser beam, and moves the processing head 35 along the second side L2.

In the laser processing method according to the first embodiment, the cutting processing is performed up to the edge portion A while maintaining a normal cutting speed without decelerating, and the laser beam is stopped after the processing head 35 reaches the edge portion A. This makes it possible to suppress instability of the cutting condition caused by decelerating the processing head 35 before reaching the edge portion A, thereby suppressing a meltdown of the edge portion A.

Further, the laser processing method according to the first embodiment can also be applied to the edge portion A of the cutout because the emission of the laser beam is stopped at the edge portion A. This makes it possible to reduce a cutting range of the workpiece W, thereby suppressing a decrease in a usage rate.

In the laser processing method according to the first embodiment, a cut can be made from the edge portion A by a predetermined distance along the second side L2 by means of a pulsed laser beam. By making a cut by means of the pulsed laser beam, when cutting processing starts from the edge portion A along the second side L2, it is possible to suppress overburning caused by the accumulation of the heat in the vicinity of the already cut first side L1. This makes it possible to suppress the formation of a concave portion in the cutting side surface. In addition, it is possible to form a cutting front on the cutting processing locus of the second side L2 to be cut next at the edge portion A, thereby making it possible to suppress a meltdown of the lower surface of the edge portion A when starting to cut the second side L2.

In the laser processing method according to the first embodiment, the cutting processing of the second side L2 can be started from the edge portion A at normal cutting speed. This makes it possible to suppress instability of the cutting condition, thereby suppressing a meltdown of the edge portion A.

From the above description, the quality of the edge portion A can be improved in thermal cutting of the thick workpiece W. The present embodiment can also be applied to the edge portion of the cutout.

In the laser processing method according to the first embodiment of the present invention, the corner portion is the corner portion of the outer corner on the cutting processing locus, and stopping emitting the laser beam after the processing head 35 moving along the first side L1 reaches the corner portion includes moving the processing head 35 from the corner portion to the second predetermined position (position B) separated by the second predetermined distance (distance D2) along the extension line of the first side L1 while emitting the laser beam after the processing head 35 moving along the first side L1 reaches the corner portion, and stopping emitting the laser beam when the processing head reaches the second predetermined position.

Accordingly, the laser processing method according to the first embodiment makes it possible to make a cut from the edge portion A by a predetermined distance along the extension line of the first side L1. By making a cut as above, it is possible to further suppress a meltdown of the lower surface of the edge portion A. In addition, it is possible to further suppress the accumulation of the heat generated when cutting the first side L1, thereby suppressing an explosion due to overburning.

In the laser processing method according to the first embodiment, the corner portion is the corner portion of the cutout on the cutting locus, and stopping emitting the laser beam after the processing head 35 moving along the first side L1 reaches the corner portion includes stopping emitting the laser beam when the processing head 35 moving along the first side L1 reaches the corner portion.

Accordingly, the laser processing method according to the first embodiment makes it possible to suppress instability of the cutting condition caused by decelerating the processing head 35 when cutting and processing the corner portion, thereby suppressing a meltdown of the edge portion A. Further, the laser processing method can also be applied to the edge portion A of the cutout by stopping emitting the laser beam at the edge portion A.

In the laser processing method according to the first embodiment, the second predetermined distance is set based on the material of the workpiece W. The predetermined distance at which a cut is made from the edge portion A along the extension line of the first side L1 can be set to a value most suitable for the material, thereby further improving the quality of the edge portion A.

In the laser processing method according to the first embodiment, the first predetermined distance is set based on the material of the workpiece W. The predetermined distance at which a cut is made from the edge portion A along the second side L2 by means of a pulsed laser beam can be set to a value most suitable for the material, thereby further improving the quality of the edge portion A.

### [Second embodiment]

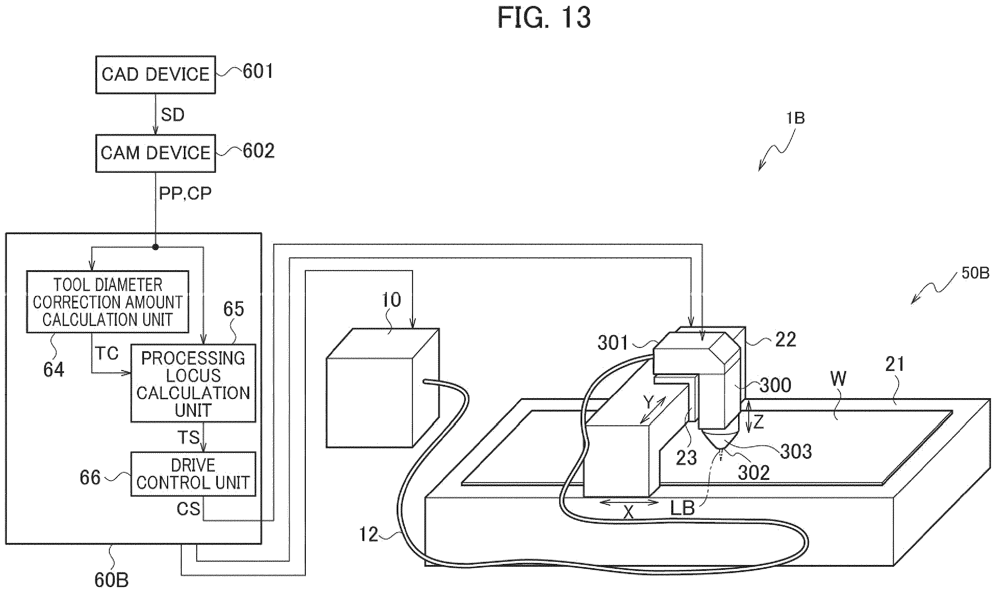

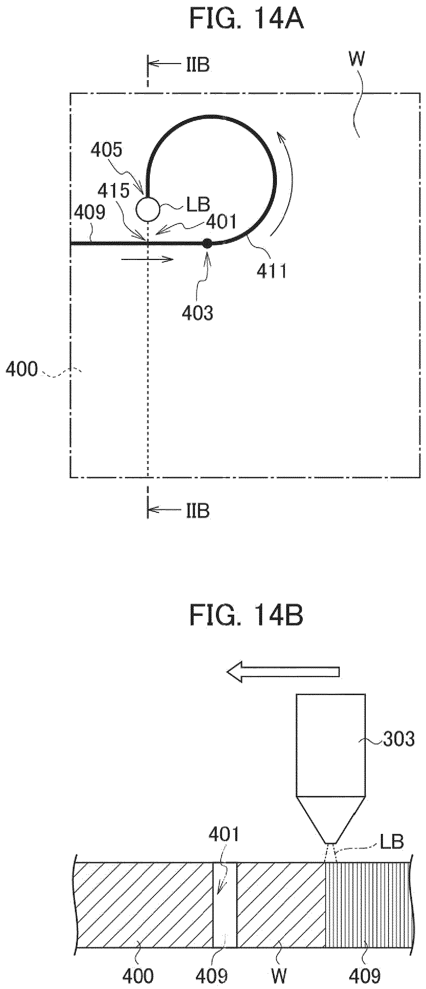

Hereinafter, a laser processing method and a laser processing machine according to a second embodiment of the present invention will be described with reference to the drawings. FIG. 13 is a diagram illustrating an example of an overall structure of a laser processing machine 1B according to the second embodiment of the present invention. FIGS. 14A to 17A are diagrams illustrating the content of control performed by a control unit 60B for cutting processing of a workpiece by means of the processing machine main body 50B of FIG. 13. FIGS. 14B to 17B are respective cross-sectional views along the IIB-IIB lines, the IIIB-IIIB lines, the IVB-IVB lines and the VB-VB lines of FIGS. 14A to 17A.

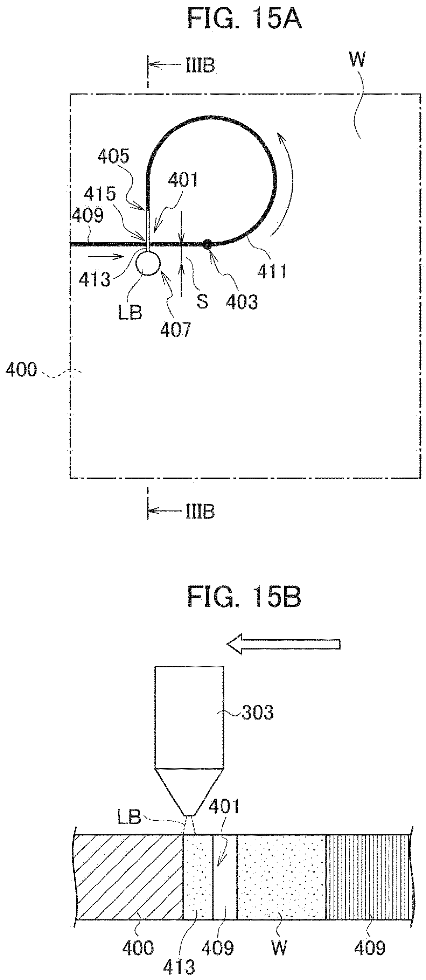

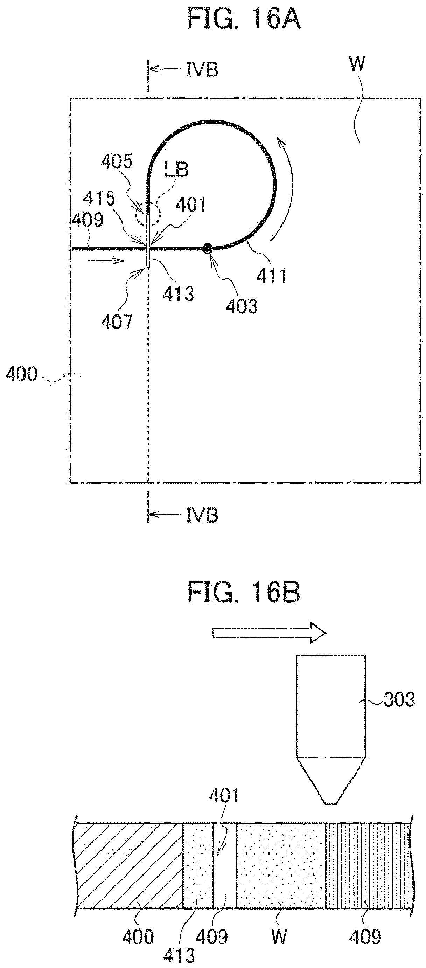

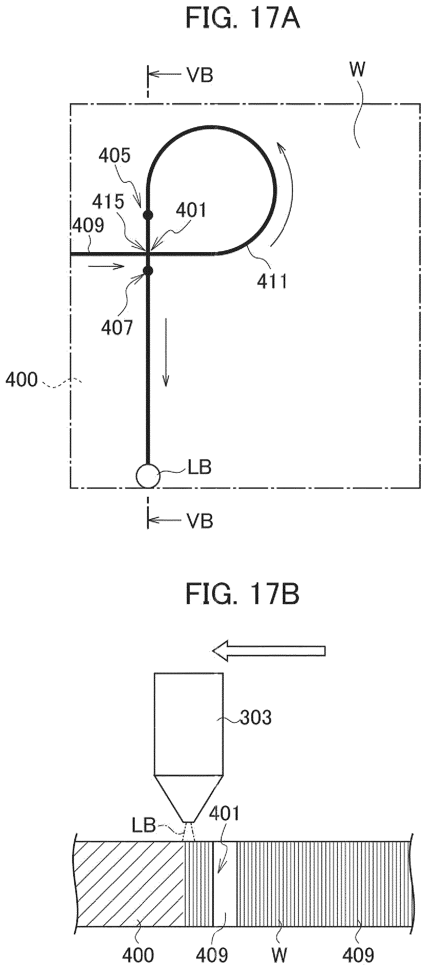

As illustrated in FIG. 13, the laser processing machine 1B according to the second embodiment includes:
a processing machine main body 50B which irradiates a workpiece W with a laser beam along a locus corresponding to a shape of a product 400 acquired by cutting and processing the workpiece W; and
a control unit (NC device) 60B which controls the processing machine main body 50B; in which
as illustrated in FIGS. 14A and 14B, the control unit 60B controls the processing machine main body 50B in such a way as to:
   move a laser beam LB under a normal processing condition, which has reached a vertex by moving on the workpiece W along one side among the two sides which are made to abut against each other at the vertex of the edge portion 401 of the outer corner of the product 400, further on the workpiece W to the first processing point 403 positioned on an extension line of one side along the extension line of one side by passing through the vertex;
   move the irradiation position of the laser beam LB on the workpiece W from the first processing point 403 to the second processing point 405 that is positioned on an extension line of the other side among the two sides;
   as illustrated in FIGS. 15A and 15B, move the laser beam LB on the workpiece W from the second processing point 405 to the third processing point 407 on the other side along the extension line of the other side and the other side by passing through the vertex, under a corner processing condition having lower speed and lower output than the normal processing condition;
   as illustrated in FIGS. 16A and 16B, move the irradiation position of the laser beam LB on the workpiece W from the third processing point 407 to the second processing point 405, in a state where the output of the laser beam LB is stopped; and
   as illustrated in FIGS. 17A and 17B, move the laser beam LB on the workpiece W, which has moved from the second processing point 405 to the vertex along the extension line of the other side under the normal processing condition, further on the workpiece W along the other side through the third processing point 407, under the normal processing condition.

Hereinafter, the details of the laser processing machine 1B of the second embodiment will be described.

In FIG. 13, the laser processing machine 1B is a machine for cutting and processing the workpiece W by means of a laser beam. As illustrated in FIG. 13, the laser processing machine 1B includes a laser oscillator 10, a processing fiber 12, a processing machine main body 50B, and an NC device 60B as a control unit. The NC device 60B controls the laser oscillator 10 and the processing machine main body 50B. The laser oscillator 10 generates and emits a laser beam. The laser beam emitted from the laser oscillator 10 is transmitted to the processing machine main body 50B through the process fiber 12. The processing machine main body 50B irradiates the workpiece W with a laser beam, and changes the relative position between the workpiece W and the beam spot of the laser beam, thereby cutting and processing the workpiece W into the shape of a final processed product (product).

The laser oscillator 10 has the same structure as the laser oscillator 10 in the laser processing machine 1A of the first embodiment. In addition to a laser diode as a medium, a carbon dioxide laser using carbon dioxide as a medium can also be used for the laser oscillator 10.

The laser processing method by means of the laser processing machine 1B of the second embodiment is effective in suppressing an excessive meltdown of the workpiece W on the lower surface side. Needless to say, it is meaningful to use the laser processing method using the laser processing machine 1B of the second embodiment when using a laser diode beam with which the possibility of an excessive meltdown of the workpiece W is high on the lower surface side in cutting processing of the workpiece W. It is also meaningful to use the laser processing method using the laser processing machine 1B of the second embodiment when using a carbon dioxide laser with which there is still some possibility of an excessive meltdown of the workpiece W on the lower surface side in cutting processing of the workpiece W. From the circumstances described above, the laser oscillator 10 of the laser processing machine 1B of the second embodiment may be a carbon dioxide laser.

The processing machine main body 50B includes a processing table 21 on which a workpiece W is mounted, a gate type X-axis carriage 22, a Y-axis carriage 23, a processing unit 300, and a tool locus control unit 301. The laser beam emitted from the laser oscillator 10 is transmitted to the processing unit 300 of the processing machine main body 50B through the process fiber 12. The tool locus control unit 301 is housed inside the processing unit 300.

The configuration of the X-axis carriage 22 and the Y-axis carriage 23 is the same as that of the X-axis carriage 22 and the Y-axis carriage 23 in the laser processing machine 1A of the first embodiment, and thus a description thereof will be omitted.

A nozzle 303 is attached to the processing unit 300. A circular opening 302 is formed at the tip edge of the nozzle 303. The laser beam transmitted to the processing unit 300 is emitted from the opening 302 of the nozzle 303, and radiated on the upper surface of the workpiece W.

An oxygen assist gas is supplied to the processing unit 300. When processing the workpiece W, the assist gas is blown from the opening 302 of the nozzle 303 onto the workpiece W.

The tool locus control unit 301 functions as a beam vibration mechanism for vibrating a laser beam, which travels in the processing unit 300 and is emitted from the opening 302, in a non-circular vibration pattern. The tool locus control unit 301 vibrates a laser beam in a non-circular vibration pattern, and thus the processing unit 300 cuts a workpiece W along a non-circular tool locus. A description will be given later regarding a specific configuration example of the tool locus control unit 301 and a method in which the tool locus control unit 301 vibrates a beam spot of a laser beam in a non-circular vibration pattern.

Here, a tool locus is a figure in which a locus of a beam by vibrating a beam in a non-circular vibration pattern within a certain time is drawn, and refers to a vibration tool shape. That is, normally, the circular laser beam emitted from the nozzle 303 is a cutting tool, and a radius portion of the beam is a tool radius compensation; however, in the present description, the tool locus of the figure drawn using a vibration pattern is a cutting tool. When the relative position between the nozzle 303 and the processing table 21 is fixed, the cutting processing locus corresponds to the tool locus.

A CAD (computer aided design) device 601 generates product shape data (CAD data) SD, based on product shape information including the dimensions and shape of the final processed product acquired by cutting and processing the workpiece W. The CAD device 601 outputs the generated product shape data SD to a CAM device 602. The CAM device 602 generates a processing program (NC data) PP for the laser processing machine 1B to perform cutting and processing of the workpiece W, and specifies the processing condition CP, based on the product shape data SD. That is, the processing program PP and the processing condition CP are set based on the product shape information including the dimensions and shape of the final processed product.

The processing program PP includes a G code of G41 (left tool radius compensation) for shifting a locus of the cutting tool to the left side in the travelling direction of cutting processing by the amount of tool radius compensation, or a G code of G42 (right tool radius compensation) for shifting to the right side in the travelling direction. By controlling the locus of the cutting tool with the G code, it is possible to avoid deviating the locus of the beam to the inner side or outer side of the contour of the final processed product.

The CAM device 602 specifies a tool locus corresponding to a cutting tool as a processing condition CP. The tool locus has a non-circular shape, for example. The CAM device 602 can specify a plurality of tool loci having different shapes or tool diameters. The processing condition CP includes cutting tool information for changing a tool locus during cutting processing.

The processing condition CP includes processed object information in which material parameters, such as material and a thickness of the workpiece W, are specified. The processing condition CP includes processing parameters such as output of a laser beam, processing speed, and diameter of the opening 302 of the nozzle 303 (nozzle diameter), and cutting processing information such as an assist gas condition. That is, the processing condition CP includes cutting tool information such as a tool locus, processed object information, and cutting processing information.

The CAM device 602 outputs the processing program PP and the processing condition CP to the NC device 60B of the laser processing machine 1B. The NC device 60B controls the laser oscillator 10 based on the processing program PP and the processing condition CP. The NC device 60B controls the processing machine main body 50B based on the processing program PP and the processing condition CP to drive the X-axis carriage 22 and the Y-axis carriage 23, thereby moving the nozzle 303 to a desired position.

The NC device 60B controls a locus of a beam spot of a laser beam emitted from the opening 302 of the nozzle 303 by controlling the tool locus control unit 301, based on the processing program PP and the processing condition CP. The locus of the beam spot corresponds to the tool locus.

The NC device 60B has a tool radius compensation amount calculation unit 64, a processing locus calculation unit 65, and a drive control unit 66. The processing program PP and the processing condition CP are input from the CAM device 602 to the tool radius compensation amount calculation unit 64 and the processing locus calculation unit 65. The tool radius compensation amount calculation unit 64 generates tool radius compensation information TC for compensating a tool diameter of the cutting tool for cutting and processing the workpiece W, based on the processing program PP and the processing condition CP.

The tool radius compensation amount calculation unit 64 recognizes a tool locus included in the processing condition CP. The tool radius compensation amount calculation unit 64 generates the tool radius compensation information TC, based on the recognized tool locus, a locus (hereinafter, it will be referred to as "nozzle locus") of the nozzle 303, and the traveling direction of cutting processing. The tool locus corresponds to a cutting tool for cutting and processing the workpiece W. The shape of the tool locus corresponds to the shape of the cutting tool. The tool locus has, for example, a non-circular shape.

The tool radius compensation information TC includes a control center point in the tool locus, and a center point of the nozzle 303 in the nozzle locus (hereinafter, it will be referred to as "nozzle center point"). The control center point corresponds to the center of a laser beam when making a tool radius compensation for general laser processing. In the second embodiment, the tool locus is a non-circular cutting tool, and when the cutting line is the boundary between the cutting tool and the product, the control center point of the tool locus is the center position of the cutting tool to be controlled with respect to the cutting line. The nozzle locus is specifically the locus of the nozzle center point. The center point of the nozzle 303 coincides with the center point of the opening 302.

In the laser processing machine, the tool locus corresponds to the locus of the beam spot of the laser beam. The beam spot reciprocates on the tool locus. Alternatively, the beam spot may move periodically if it has a non-circular shape.

The tool radius compensation amount calculation unit 64 recognizes a tool locus included in the processing condition CP, and generates the tool radius compensation information TC including compensation information based on the tool locus and the compensation information based on the nozzle locus, on the basis of processing program PP and the processing condition CP. The tool radius compensation amount calculation unit 64 outputs the tool radius compensation information TC to the processing locus calculation unit 65. In addition, the tool radius compensation amount calculation unit 64 also outputs the tool radius compensation information TC including compensation information of both a left tool radius compensation and a right tool radius compensation, to the processing locus calculation unit 65.

The processing program PP and the processing condition CP are input to the processing locus calculation unit 65 from the CAM device 602, and the tool radius compensation information TC is input thereto from the tool radius compensation amount calculation unit 64. The processing locus calculation unit 65 translates a G code included in the processing program PP. The processing program PP may include a robot language or the like, instead of the G code.

The processing locus calculation unit 65 determines a cutting processing compensation condition based on the translation result, the processing program PP, the processing condition CP, and the tool radius compensation information TC. For example, regarding the cutting processing compensation condition, the cutting processing can be performed by means of a left tool radius compensation or a right tool radius compensation using a nozzle locus, or the cutting processing can be performed by means of a left tool radius compensation or a right tool radius compensation using a tool locus.

When performing cutting processing by using a tool locus, the drive control unit 66 generates a drive control signal CS based on the tool locus and a control center point in the tool locus. When performing cutting processing by using a nozzle locus, the drive control unit 66 generates a drive control signal CS based on the nozzle locus and a nozzle center point in the nozzle locus.

The drive control unit 66 controls the tool locus control unit 301 of the processing machine main body 50B by means of the drive control signal CS. The tool locus control unit 301 controls a locus of a beam spot of a laser beam emitted from the opening 302 of the nozzle 303, based on the drive control signal CS.

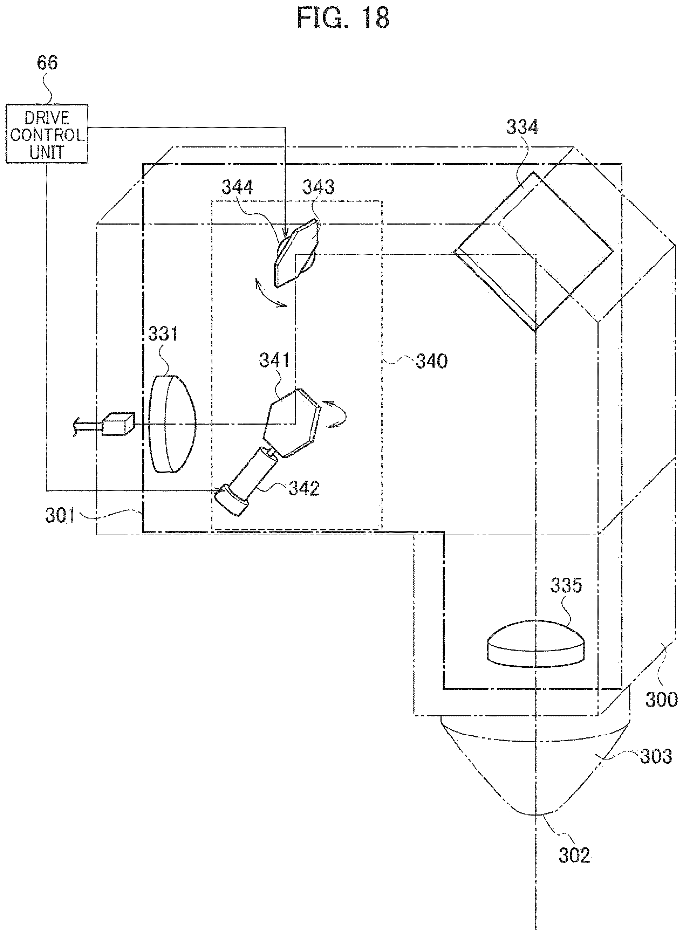

FIG. 18 is a diagram illustrating a configuration example of the tool locus control unit 301 of FIG. 13. With reference to FIG. 18, an example of the method will be described in which the tool locus control unit 301 vibrates a beam spot of a laser beam in a non-circular vibration pattern.

As illustrated in FIG. 18, the tool locus control unit 301 is housed inside the processing unit 300. The tool locus control unit 301 has a collimator lens 331, a galvano scanner unit 340, a bend mirror 334, and a focusing lens 335. The collimator lens 331 converts a laser beam emitted from the process fiber 12 into parallel light (collimated light).

The drive unit 342 can reciprocate the scan mirror 341 in a predetermined direction (for example, in the X direction) in a predetermined angular range under the control of the drive control unit 66. The scan mirror 341 reflects the laser beam, which is converted into parallel light by the collimator lens 331, toward the scan mirror 343.

The drive unit 344 can reciprocate the scan mirror 343 in a direction different from the drive direction of the scan mirror 341 (for example, in the Y direction) in a predetermined angle range under the control of the drive control unit 66. The scan mirror 343 reflects the laser beam, which is reflected from the scan mirror 341, toward the bend mirror 334.

The bend mirror 334 reflects the laser beam reflected from the scan mirror 343 downward in the Z-axis direction perpendicular to the X-axis and Y-axis. The focusing lens 335 focuses the laser beam reflected from the bend mirror 334, and irradiates the workpiece W with the focused laser beam.

The galvano scanner unit 340 can make various kinds of non-circular shapes from the cutting processing locus by reciprocating and vibrating one or both of the scan mirror 341 and the scan mirror 343 at high speed. That is, by focusing a laser beam of a certain light intensity or higher to a plurality of points per unit time, various kinds of non-circular shapes can be made from the tool shape which substantially contributes to processing by coming into contact with the workpiece W.

When the laser beam is not vibrated, the scan mirror 341, the scan mirror 343, and the bend mirror 334 of the tool locus control unit 301 relating to the beam vibration mechanism can be omitted. When the laser beam is not vibrated, the parallel light of the laser beam which has passed through the collimator lens 331 is focused by the focusing lens 335 to irradiate the workpiece W. When the laser beam is not vibrated, the tool locus coincides with the contour of the beam spot of the laser beam emitted from the opening 302 of the nozzle 303.

The tool radius compensation amount calculation unit 64 of FIG. 13 recognizes whether the processing condition CP includes tool locus switching information. When the processing condition CP does not include the tool locus switching information, the tool radius compensation amount calculation unit 64 recognizes a tool locus included in the processing condition CP. When the processing condition CP includes the tool locus switching information, the tool radius compensation amount calculation unit 64 recognizes a plurality of tool loci included in the tool locus switching information.

The tool radius compensation amount calculation unit 64 generates the tool radius compensation information TC having the tool locus switching information including a plurality of tool loci, based on the processing condition CP. In addition, the tool radius compensation amount calculation unit 64 generates the tool radius compensation information TC having the tool locus change information including a control center point in a plurality of tool loci, based on the processing program PP and the processing condition CP. That is, the tool radius compensation information TC includes the tool locus switching information and the tool locus change information. The tool radius compensation amount calculation unit 64 outputs the tool radius compensation information TC to the processing locus calculation unit 65.

The processing locus calculation unit 65 translates the G code included in the processing program PP. The processing locus calculation unit 65 determines the cutting processing compensation condition, based on the translation result, the processing program PP, the processing condition CP, and the tool radius compensation information TC. Regarding the cutting processing compensation condition, the processing locus calculation unit 65 can determine to perform the cutting processing by means of a left tool radius compensation or a right tool radius compensation using a nozzle locus, or by means of a left tool radius compensation or a right tool radius compensation using a tool locus.

The processing locus calculation unit 65 outputs the tool radius compensation control signal TS to the drive control unit 66. The drive control unit 66 generates the drive control signal CS based on the tool radius compensation control signal TS. The drive control unit 66 controls the processing machine main body 50B by means of the drive control signal CS. The processing machine main body 50B controls the nozzle locus by driving the X-axis carriage 22 and the Y-axis carriage 23 based on the drive control signal CS. In addition, the processing machine main body 50B controls the tool locus by driving the tool locus control unit 301 based on the drive control signal CS.

The processing machine main body 50B can perform cutting and processing of the workpiece W along the contour of the final processed product, by means of the laser beam emitted from the opening 302 of the nozzle 303 under the control of the NC device 60B.

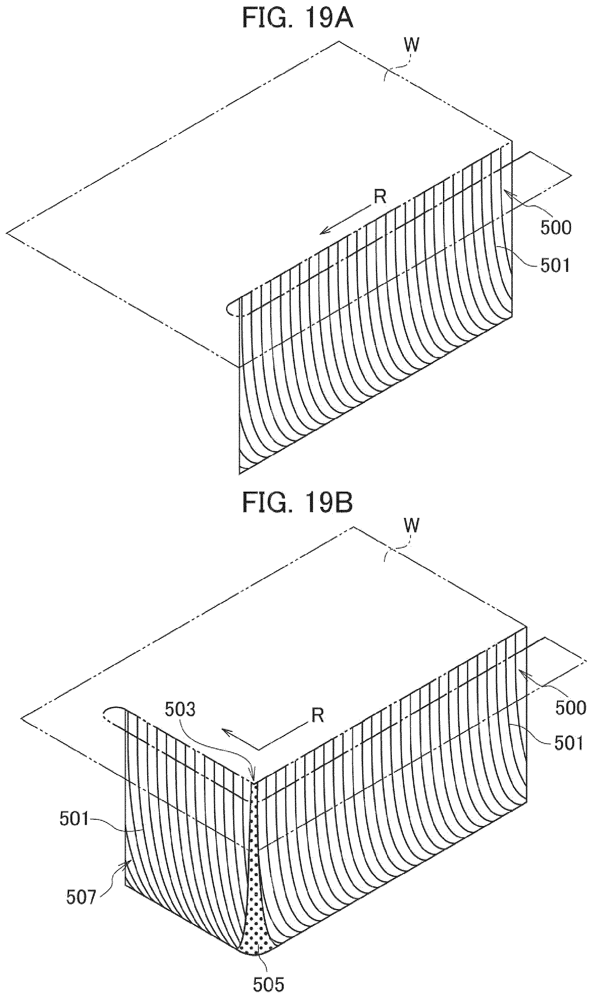

FIG. 19A is a diagram illustrating an example of drag lines generated on the cutting surface of the workpiece W in cutting processing of the workpiece W by means of the laser beam LB in the second embodiment of the present invention. When cutting and processing the workpiece W by means of the laser beam LB, as illustrated in FIG. 19A, a large number of drag lines 501 are formed on the cutting surface 500 of the workpiece W. The drag lines 501 have a shape corresponding to the flow of the metal melted by the heat input from the irradiation of the laser beam LB onto the upper surface of the workpiece W.

In comparison with the upper surface side, a meltdown of the workpiece W by means of the irradiation of the laser beam LB is generated later on the lower surface side opposite to the upper surface side, the drag lines 501 are deviated to the upstream side in the movement direction R of the laser beam LB as they are closer to the lower surface side of the workpiece W. The drag lines 501 are deviated greater as the laser beam LB moves faster.

FIG. 19B is a diagram illustrating an example of an abnormal meltdown portion (hereinafter, it will be referred to as "abnormal meltdown portion") that is generated in the cutting surface of the edge portion of the outer corner of the workpiece W in the cutting process of the workpiece W by means of the laser beam LB in the second embodiment of the present invention. When the movement direction R of the laser beam is changed to a direction along the next side at the edge portion of the outer corner of the final processed product, the portion at the inner side of the edge portion of the workpiece W from the vertex melts down by the heat input more on the lower surface side where the heat input from the laser beam reaches later. This meltdown causes the abnormal meltdown portion 505 to be generated at the edge portion 503 on the lower surface side of the workpiece W, as illustrated in FIG. 19B.

In order to reduce the abnormal meltdown portion 505 of the edge portion 503, it is effective to move the laser beam LB from the vertex of the edge portion 503 in the direction along the next side after waiting for the meltdown on the lower surface side of the workpiece W which is delayed to reach the vertex of the edge portion 503.

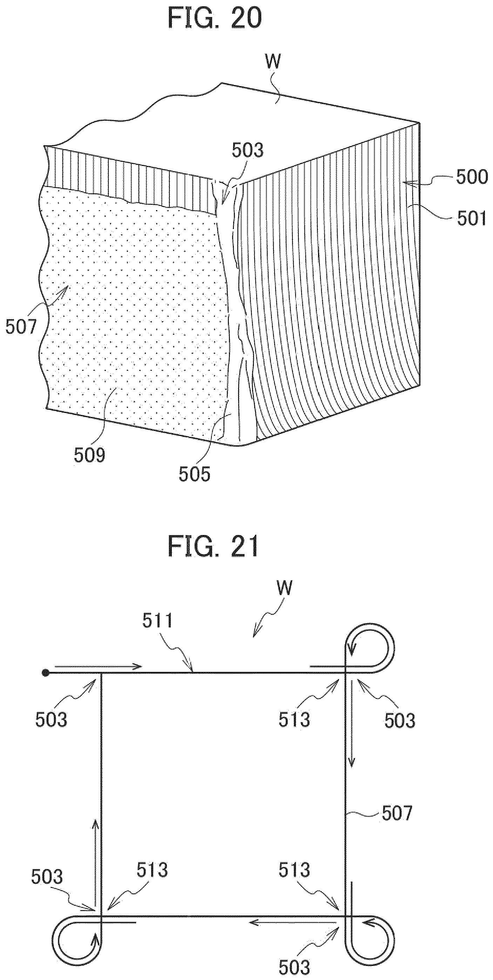

FIG. 20 is a diagram illustrating an example of the cutting surface of the edge portion 503 when the cutting processing of the workpiece W by means of the laser beam LB is stopped once at the vertex of the edge portion 503 of the workpiece W and resumed, in the second embodiment of the present invention. If the irradiation of the laser beam is stopped once at the vertex of the edge portion 503 until the meltdown of the lower surface which is delayed reaches the vertex of the edge portion 503, which reduces the abnormal meltdown portion 505 of the edge portion 503 to be generated, as illustrated in FIG. 20.

When the irradiation of the laser beam which has stopped once at the vertex of the edge portion 503 is resumed in the direction along the next side, an irregular surface concavo-convex 509 is formed in the cutting surface 507 of the cut workpiece W. The irregular surface concavo-convex 509 is formed in the cutting surface 507 of the next side until the moving speed of the laser beam LB is stabilized after the irradiation of the laser beam LB is resumed in the direction along the next side.

FIG. 21 is a diagram illustrating an example of the movement locus of the laser beam LB when moving the irradiation position of the laser beam LB in a loop-like shape on the workpiece W to cut the edge portion 503 of the outer corner of the final processed product. FIG. 21 illustrates a kerf 511, which is formed in the workpiece W caused by irradiation of the laser beam LB, as a movement locus of the laser beam LB.

As illustrated in FIG. 21, it is also considered that the laser beam LB is moved in a loop-like shape at the edge portion 503 to melt the lower surface side of the workpiece W up to the vertex of the edge portion 503, and then the cutting surface 507 of the next side is formed. As the curvature of the loop portion is smaller, an excessive heat input can be avoided without reducing the passing speed of the laser beam LB at the loop portion, thereby making it possible to move the laser beam LB to the loop portion under the same normal processing condition as when the laser beam LB moves linearly.

The laser beam LB, which has moved at the loop portion under the normal processing condition, passes through a step-over portion 513 which steps over the front side and the other side of the kerf 511, which is already formed in the workpiece W caused by irradiation of the laser beam LB before the loop.

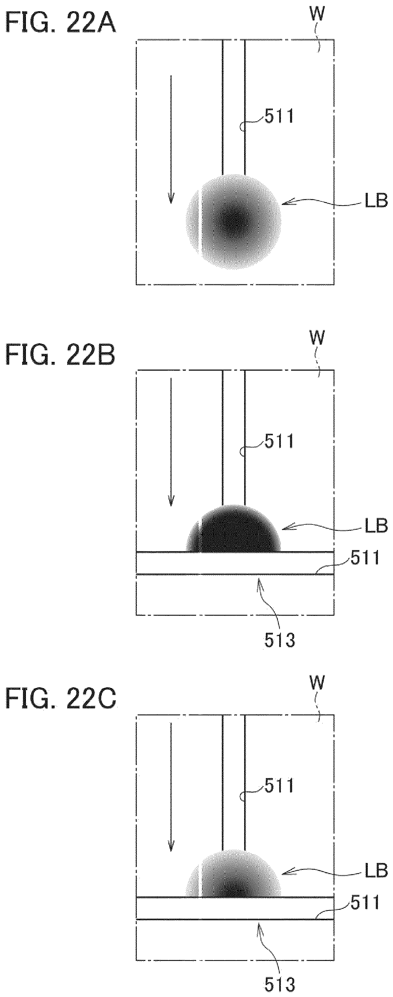

FIG. 22A is a diagram illustrating a distribution of heat input at the portion of the workpiece W irradiated with the laser beam LB. FIG. 22B is a diagram illustrating a distribution of heat input at the portion where the laser beam LB moves by straddling the kerf 511 already formed in the workpiece W. FIG. 22C is a diagram illustrating a distribution of heat input at the portion where the laser beam LB moves at low speed and low output by straddling the kerf 511 already formed in the workpiece W.

As illustrated in FIG. 22A, in the irradiation portion of the workpiece W by means of the laser beam LB, the heat input from the laser beam LB is radiated along the upper surface of the workpiece W onto which the laser beam LB is radiated, and distributed concentrically. When the laser beam LB passes through the step-over portion 513, the heat input from the laser beam LB radiated at the front side of the kerf 511 is not transmitted to the other side of the kerf 511. As illustrated in FIG. 22B, the heat input from the laser beam LB that is radiated at the front side of the step-over portion 513 is accumulated at the front side of the step-over portion 513 in the workpiece W.

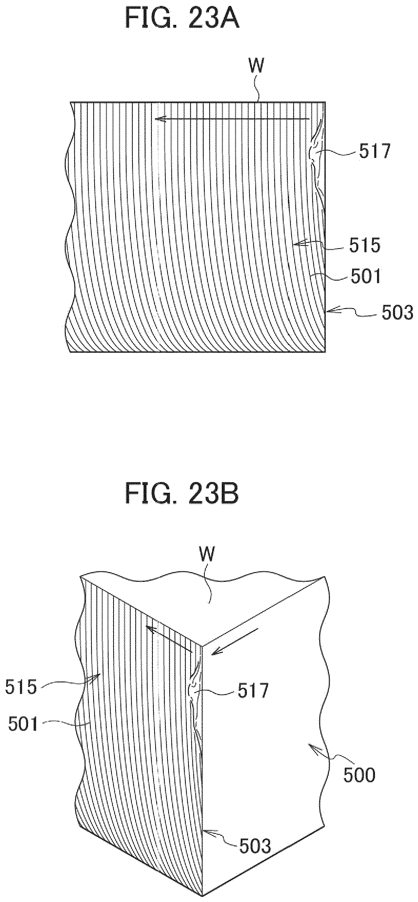

FIG. 23A is a diagram illustrating an example of a cutting surface formed on the workpiece W by means of the laser beam, which passed through the loop portion of FIG. 21 and passed through the step-over portion 513 which steps over the front side and the other side of the kerf 511 already formed in the workpiece W. FIG. 23B is a perspective view illustrating the cutting surface of FIG. 23A together with an example of a cutting surface formed on the workpiece W by means of the laser beam before passing through the loop portion.

The input heat which is accumulated at the front side of the step-over portion 513 forms a concave portion 517 illustrated in FIGS. 23A and 23B on the upper surface side of the cutting surface 515 of the workpiece W cut by the laser beam LB which passed through the loop portion.

When the processing condition of the laser beam is changed to lower speed and lower output than the normal processing condition at the front side of the step-over portion 513, it is possible to reduce the heat input accumulated at the front side of the step-over portion 513 as illustrated in FIG. 22C, thereby suppressing the formation of the concave portion 517 illustrated in FIGS. 23A and 23B,.

In a case where the processing condition of the laser beam is changed to low speed and low output at the front side of the step-over portion 513, when the irradiation portion of the laser beam LB straddles the step-over portion 513, the processing condition of the laser beam is returned to the former normal processing condition with high speed and high output. When the processing condition of the laser beam LB is returned to the normal processing condition to continue cutting the next side, the flow of the molten metal in the workpiece W suddenly changes due to the sudden change of the output and the moving speed of the laser beam LB.

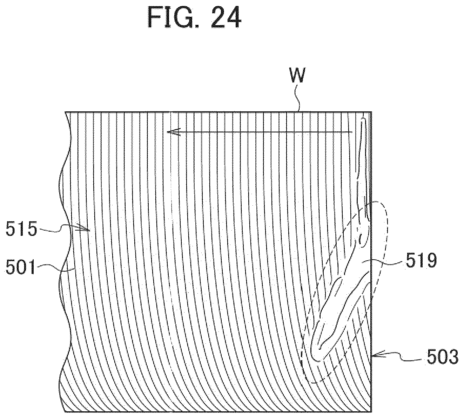

FIG. 24 is a diagram illustrating an example of a concave portion formed in the cutting surface 515 of the next side, when the cutting processing of the workpiece W by means of the laser beam LB is returned from low speed and low output to the normal processing condition at the step-over portion 513. When the cutting of the next side is continued by using the laser beam LB returned to the normal processing condition, the flow of molten metal in the workpiece W suddenly changes, and a concave portion 519 is formed in the cutting surface 515 of the next side, as illustrated in FIG. 24.

In the laser processing machine 1B of the second embodiment, when the workpiece W is cut into the shape of the final processed product, the laser beam LB moving in the two sides which are made to abut against each other at the edge portion is moved in a loop-like shape at the edge portion of each outer corner of the final processed product. When the laser beam LB passing through the loop portion passes through the step-over portion which steps over the front side and the other side of the kerf already formed in the workpiece W, the step-over portion in the workpiece W is irradiated with the laser beam LB under the corner processing condition having low speed and low output. By irradiating the step-over portion with the laser beam LB under the corner processing condition, a cutting front is formed on the other side of the step-over portion.

After the formation of the cutting front, the laser beam LB under the normal processing condition is radiated again from the step-over portion along the next side through the cutting front to cut the workpiece W along the next side.

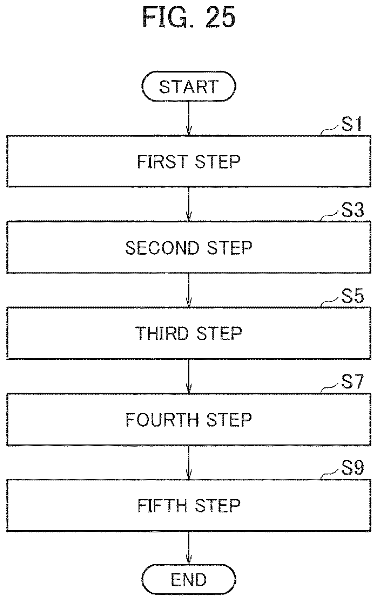

FIG. 25 is a flowchart illustrating an example of processing procedures performed by the NC device 60B of FIG. 13. In the laser processing machine 1B of the second embodiment, the processing machine main body 50B irradiates the workpiece W with the laser beam LB along a locus corresponding to the shape of a product acquired by cutting and processing the workpiece W. The NC device 60B performs the processing for controlling the processing machine main body 50B along the processing procedures of FIG. 25 in order for the processing machine main body 50B to perform cutting processing according to the shape of a product at the edge portion of each outer corner of the product.

The NC device 60B of FIG. 13 performs the control processing of the processing machine main body 50B by means of the five steps from the first to fifth steps (steps S1 to S9) illustrated in FIG. 25.

In the first step (step S1), the NC device 60B controls the movement of the laser beam LB moving on the workpiece W along one side of the two sides which are made to abut against each other at the vertex of the edge portion 401 of the outer corner of the product 400, as illustrated in FIGS. 14A and 14B. In FIGS. 14A and 14B, a kerf 409, which is formed in the workpiece W caused by irradiation of the laser beam LB, is illustrated as a movement locus of the laser beam LB.

Specifically, in the first step, the NC device 60B moves the laser beam LB under the normal processing condition, which has reached the vertex of the edge portion 401 by moving along one side of the edge portion 401, further on the workpiece W along the extension line of one side by passing through the vertex of the edge portion 401. The NC device 60B moves the laser beam LB, which passed through the vertex of the edge portion 401, to the first processing point 403 positioned on the extension line of one side.

In the second step (step S3) of FIG. 25, the NC device 60B moves the irradiation position of the laser beam LB on the workpiece W from the first processing point 403 to the second processing point 405 that is positioned on an extension line of the other side among the two sides of the edge portion 401. In FIGS. 14A and 14B, the irradiation position of the laser beam LB on the workpiece W is moved by passing through a loop 411 starting from the first processing point 403 along an extension line of one side of the edge portion 401 to the second processing point 405 along an extension line of the other side. FIGS. 14A and 14B illustrate a case where the irradiation portion of the laser beam LB is moved from the first processing point 403 to the second processing point 405 while continuing the output of the laser beam LB. That is, in FIGS. 14A and 14B, the laser beam LB under the normal processing condition is moved on the workpiece W from the first processing point 403 to the second processing point 405.

As the curvature of the loop 411 is smaller and the radius of the loop 411 is larger, an excessive heat input can be avoided without reducing the passing speed of the laser beam LB in the loop 411 while maintaining the same normal processing condition as that in the linear movement. As the radius of the loop 411 is larger, the loop 411 can be moved to the laser beam LB while maintaining the same normal processing condition as that in the linear movement.

In the third step (step S5) of FIG. 25, the NC device 60B moves the laser beam LB on the workpiece W from the second processing point 405 to the third processing point 407 on the other side, along the other side and the side of the extension line of the other side, as illustrated in FIGS. 15A and 15B. The NC device 60B moves the laser beam LB from the second processing point 405 to the third processing point 407 by passing through the vertex of the edge portion 401, under the corner processing condition having lower speed and lower output than the normal processing condition.

In this movement, the laser beam LB passes through the step-over portion 415, which steps over the front side to the other side the kerf 409 formed in the workpiece W by being irradiated with the laser beam LB before the loop 411. The laser beam LB under the corner processing condition which has passed through the step-over portion 415 forms a kerf 413, serving as a cutting front, on the other side of the kerf 409 in the workpiece W.

The length S of the kerf 413 from the step-over portion 415 illustrated in FIG. 15A can be as long as the kerf 413 functions as a cutting front for the laser beam LB when the laser beam LB under the normal processing condition is moved from the step-over portion 415 to the kerf 413. The length S of the kerf 413 may be 1 mm, for example, depending on a plate thickness, material, and the like of the workpiece W.

The laser beam LB forming the kerf 413, which serves as a cutting front, is radiated onto the workpiece W under the corner processing condition having low speed and low output. Thus, when forming the kerf 413, the formation of the concave portions 517 and 519 illustrated in FIGS. 23A and 23B and FIG. 24 can be suppressed.

In the fourth step (step S7) of FIG. 25, the NC device 60B moves the irradiation position of the laser beam LB on the workpiece W from the third processing point 407 to the second processing point 405, as illustrated in FIGS. 16A and 16B, in a state where the output of the laser beam LB is stopped.

In the fifth step (step S9) of FIG. 25, as illustrated in FIGS. 17A and 17B, the NC device 60B moves the laser beam LB on the workpiece W from the second processing point 405 to the vertex of the edge portion 401, along the extension line of the other side of the edge portion 401 under the normal processing condition. The NC device 60B further moves the laser beam LB on the workpiece W from the vertex of the edge portion 401 along the other side of the edge portion 401 through the third processing point 407 under the normal processing condition.

In this movement, in the workpiece W, the kerf 409 is formed along the other side of the edge portion 401 from the second processing point 405 through the vertex of the edge portion 401. When the laser beam LB moves from the second processing point 405 under the normal processing condition, the processing condition for the laser beam LB is not changed. Accordingly, it is possible to suppress the formation of a deformation, such as the concave portion 519 in FIG. 24, due to the sudden change in the flow of molten metal in the workpiece W caused by the sudden change in the speed and output of the laser beam LB, in the cutting surface of the kerf 409 formed in the workpiece W.

When moving the laser beam LB from the second processing point 405 through the vertex of the edge portion 401 in the fifth step, the laser beam LB needs to be stable at the speed and output under the normal processing condition by the time it passes through the vertex of the edge portion 401. For this reason, it is necessary to have a sufficient distance between the second processing point 405 and the vertex of the edge portion 401 such that the speed and output of the laser beam LB which has started to move from the second processing point 405 are stable at the speed and output under the normal processing condition by the time the laser beam LB passes through the vertex of the edge portion 401.

For example, regarding the input for causing the NC device 60B to control the operation of the processing machine main body 50B using the procedures in the steps S1 to S9, the CAM device 602 illustrated in FIG. 13 may specify a route which passes through the loop 411 in the part allocation menu for the edge portion 401. In this case, the CAM device 602 outputs to the NC device 60B, the coordinate values required for specifying the positions of the edge portion 401 and the loop 411. The NC device 60B generates an NC code for moving the laser beam LB by passing through the loop 411, using the coordinate values from the CAM device 602.

In addition, for example, regarding the input for causing the NC device 60B to control the operation of the processing machine main body 50B using the procedures in the steps S1 to S9, an NC code such as a G code may be directly input to the NC device 60B using the operation panel (not illustrated) of the processing machine main body 50B.

### (Operational effect of second embodiment)

In the laser processing method and the laser processing machine 1B according to the second embodiment of the present invention, as illustrated in FIGS. 14A and 14B, the laser beam LB under the normal processing condition, which has reached the vertex of the edge portion 401 along one side of the edge portion 401 of the outer corner of the product 400, is moved to the first processing point 403 on an extension line of one side. Thereafter, the kerf 409 passing through the vertex of the edge portion 401 is formed from one side of the workpiece W to the first processing point 403. The kerf 409 formed up to the first processing point 403 is linearly arranged on the workpiece W along one side of the edge portion 401. As illustrated in FIGS. 15A and 15B, the kerf 409 is arranged between the second processing point 405 and the third processing point 407, which are positioned on the other side and the extension line of the other side with the vertex of the edge portion 401 sandwiched therebetween.

When the laser beam LB is moved from the second processing point 405 to the third processing point 407, the laser beam LB passes through the step-over portion 415 which steps over the front side and the other side of the kerf 409 passing through the vertex of the edge portion 401. The laser beam LB which has passed through the step-over portion 415 forms the kerf 413 between the kerf 409 of the workpiece W and the third processing point 407 along the other side of the edge portion 401. The kerf 413 functions as a cutting front for the laser beam LB which passes through the step-over portion 415.

The laser beam LB which passes through the step-over portion 415 moves under the corner processing condition having lower speed and lower output than the normal processing condition. Therefore, in the formation of the kerf 409 which functions as a cutting front, a deformation due to the heat input which is accumulated in the step-over portion 415 can be suppressed in the cutting surface of the kerf 409.

The second processing point 405 and the third processing point 407 are arranged on the other side of the edge portion 401 of the product or on the extension line thereof, on both sides with the vertex of the edge portion 401 sandwiched therebetween. After the formation of the kerf 409 serving as a cutting front, as illustrated in FIGS. 17A and 17B, the laser beam LB is moved from the second processing point 405 along the other side through the vertex of the edge portion 401 and the third processing point 407. The laser beam LB can be moved on the other side or an extension line thereof, under the linear condition (normal processing condition) without reducing speed and output.

For this reason, when cutting and processing the workpiece W along two sides of the edge portion 401 of the product, it is possible to suppress a deformation of the cutting surface due to a change in the processing condition.

The laser processing machine 1B of the second embodiment can perform cutting and processing of the edge portion 401 in which two sides of the product 400, which is acquired by cutting and processing the workpiece W, are made to abut against each other, by means of the laser beam LB under the normal processing condition in the linear movement, thereby making it possible to process the edge portion 401 of the product with high quality.

Regarding the movement of the irradiation portion of the laser beam LB from the first processing point 403 to the second processing point 405 in the second step of FIG. 25, a route other than the loop 411 may be adopted. Further, the movement of the irradiation portion of the laser beam LB from the first processing point 403 to the second processing point 405 in the second step may be performed in a state where the output of the laser beam LB is stopped.

In order to move the laser beam LB without stopping the output thereof, it is necessary to reduce the curvature of the loop 411 and increase the radius of the loop 411. By increasing the radius of the loop 411, the irradiation portion of the laser beam LB can be moved from the first processing point 403 to the second processing point 405 without changing the processing condition for speed and output from the normal processing condition. By not changing the processing condition for the laser beam LB, it is possible to suppress a deformation of the cutting surface when cutting and processing the tip edge of the second processing point 405 by means of the irradiation of the laser beam LB.

With the structure described above, the invention of the laser processing method described below can be disclosed.

In the laser processing method according to the second embodiment, the second step of moving the irradiation position of the laser beam on the workpiece from the first processing point to the second processing point that is positioned on the extension line of the other side among the two sides can be disclosed as described below. For example, in the second step, the irradiation position of the laser beam on the workpiece may be moved by passing through a loop starting from the first processing point along the extension line of one side to the second processing point along the extension line of the other side. Further, in the second step, the laser beam under the normal processing condition may be moved on the workpiece from the first processing point to the second processing point.

In the above disclosed invention, the laser beam can be moved from the first processing point to the second processing point without lowering the output of the laser beam in the second step, and thus it is not necessary to return the laser beam to the former output in the movement after the second step. By reducing the need to change the output of the laser beam, it is possible to suppress a change in the flow of molten metal in the workpiece due to a change in the output of the laser beam, thereby suppressing a deformation of the cutting surface at the edge portion of the outer corner of the product.

## Claims

1. A laser processing method that performs cutting processing of a workpiece (W) by moving a processing head (35) relatively that emits a laser beam toward the workpiece (W) along a cutting processing locus having a first side (L1), a second side (L2), and a corner portion (A) where the first side (L1) and the second side (L2) intersect with each other, the method comprising:
moving the processing head (35) to the corner portion (A) along the first side (L1) without decelerating while emitting the laser beam;
the method being **characterised by** the following steps:
stopping emitting the laser beam after the processing head (35) moving along the first side (L1) reaches the corner portion (A;
moving the processing head (35) from the corner portion (A) to a first predetermined position (D) separated by a first predetermined distance (D1) along the second side (L2) while emitting the laser beam intermittently, and stopping emitting the laser beam and moving the processing head (35) when the processing head (35) reaches the first predetermined position (D);
moving the processing head (35) to a position (E) that is on an extension line of the second side (L2) and before the corner portion (A), and then accelerating the processing head (35) toward the corner portion (A), in a state where an emission of the laser beam is stopped; and
starting to emit the laser beam when the processing head (35) accelerating toward the corner portion (A) reaches the corner portion (A), and moving the processing head (35) along the second side (L2).

2. The laser processing method according to claim 1, wherein
the corner portion (A) is a corner portion that presents a convex portion toward an outer side of a product on the cutting processing locus, and
stopping emitting the laser beam after the processing head (35) moving along the first side (L1) reaches the corner portion (A) includes:
moving the processing head (35) from the corner portion (A) to a second predetermined position (B) separated by a second predetermined distance (D2) along an extension line of the first side (L1) while emitting the laser beam, after the processing head (35) moving along the first side (L1) reaches the corner portion (A); and
stopping emitting the laser beam when the processing head (35) reaches the second predetermined position (B).

3. The laser processing method according to claim 1 or 2, wherein
the corner portion (A) is a corner portion of a cutout on the cutting processing locus, and
stopping emitting the laser beam after the processing head (35) moving along the first side (L1) reaches the corner portion (A) includes:
stopping emitting the laser beam when the processing head (35) moving along the first side (L1) reaches the corner portion (A).

4. The laser processing method according to claim 2, wherein
the second predetermined distance (D2) is set based on material of the workpiece (W).

5. The laser processing method according to any one of claims 1 to 4, wherein
the first predetermined distance (D1) is set based on material of the workpiece (W).

6. A laser processing machine (1A) comprising:
a processing machine main body that performs cutting processing of a workpiece (W) by moving a processing head (35) relatively that emits a laser beam toward the workpiece (W) along a cutting processing locus having a first side (L1), a second side (L2), and a corner portion (A) where the first side (L1) and the second side (L2) intersect with each other; and
a control unit (60A) being configured to control the processing machine main body,
**characterised in that** the control unit (60A) is configured to control the processing machine main body so as to:
move the processing head (35) to the corner portion (A) along the first side (L1) without decelerating while emitting the laser beam;
stop emitting the laser beam and moving the processing head (35) after the processing head (35) moving along the first side (L1) reaches the corner portion (A);
move the processing head (35) from the corner portion (A) to a first predetermined position (D) separated by a first predetermined distance (D1) along the second side (L2) while emitting the laser beam intermittently, and stop emitting the laser beam when the processing head (35) reaches the first predetermined position (D);
move the processing head (35) to a position (E) that is on an extension line of the second side (L2) and before the corner portion (A), and then accelerate the processing head (35) toward the corner portion (A), in a state where an emission of the laser beam is stopped; and
start to emit the laser beam when the processing head (35) accelerating toward the corner portion (A) reaches the corner portion (A), and move the processing head (35) along the second side (L2).

7. A laser processing method comprising:
moving a laser beam (LB) under a normal processing condition, which has reached a vertex by moving on a workpiece (W) along one side among two sides which are made to abut against each other at the vertex of a corner portion (401) which presents a convex portion toward an outer side of a product (400) acquired by cutting and processing the workpiece, further on the workpiece (W) to a first processing point (403) positioned on an extension line of one side along the extension line of one side by passing through the vertex;
moving an irradiation position of the laser beam (LB) on the workpiece (W) from the first processing point (403) to a second processing point (405) which is positioned on an extension line of the other side among the two sides;
the method being **characterised by** the following steps:
moving the laser beam (LB) on the workpiece (W) from the second processing point (405) to a third processing point (407) on the other side along the extension line of the other side and the other side by passing through the vertex, under a corner processing condition having lower speed and lower output than the normal processing condition;
moving the irradiation position of the laser beam (LB) on the workpiece (W) from the third processing point (407) to the second processing point (405), in a state where output of the laser beam (LB) is stopped; and
moving the laser beam (LB), which has moved on the workpiece (W) from the second processing point (405) to the vertex along the extension line of the other side under the normal processing condition, further on the workpiece (W) along the other side under the normal processing condition.

8. The laser processing method according to claim 7, wherein
the irradiation position of the laser beam (LB) on the workpiece (W) is moved by passing through a loop starting from the first processing point (403) along the extension line of one side to the second processing point (405) along the extension line of the other side.

9. The laser processing method according to claim 7 or 8, wherein
the laser beam (LB) under the normal processing condition is moved on the workpiece (W) from the first processing point (403) to the second processing point (405).

10. A laser processing machine (1B) comprising:
a processing machine main body (50B) which irradiates a workpiece (W) with a laser beam (LB) along a locus corresponding to a shape of a product (400) acquired by cutting and processing the workpiece (W); and
a control unit (60B) configured to control the processing machine main body (50B),
charactrised in that the control unit (60B) is configured to control the processing machine main body (50B) so as to:
move a laser beam (LB) under a normal processing condition, which has reached a vertex by moving on a workpiece (W) along one side among two sides which are made to abut against each other at the vertex of a corner portion (401) which presents a convex portion toward an outer side of the product (400), further on the workpiece (W) to a first processing point (403) positioned on an extension line of one side along the extension line of one side by passing through the vertex;
move an irradiation position of the laser beam (LB) on the workpiece (W) from the first processing point (403) to a second processing point (405) which is positioned on an extension line of the other side among the two sides;
move the laser beam (LB) on the workpiece (W) from the second processing point (405) to a third processing point (407) on the other side along the extension line of the other side and the other side by passing through the vertex, under a corner processing condition having lower speed and lower output than the normal processing condition;
move the irradiation position of the laser beam (LB) on the workpiece (W) from the third processing point (407) to the second processing point (405), in a state where output of the laser beam (LB) is stopped; and
move the laser beam (LB), which has moved on the workpiece (W) from the second processing point (405) to the vertex along the extension line of the other side under the normal processing condition, further on the workpiece (W) along the other side through the third processing point, under the normal processing condition.

## Patentansprüche

1. Ein Laserbearbeitungsverfahren, das eine Schneidbearbeitung eines Werkstücks (W) durchführt, indem ein Bearbeitungskopf (35), der einen Laserstrahl auf das Werkstück (W) richtet, entlang einer Schneidbearbeitungsbahn relativ bewegt wird, die eine erste Seite (L1), eine zweite Seite (L2) und einen Eckbereich (A), in dem sich die erste Seite (L1) und die zweite Seite (L2) schneiden, umfasst:
Bewegen des Bearbeitungskopfes (35) zu dem Eckbereich (A) entlang der ersten Seite (L1) ohne Verlangsamung, während der Laserstrahl emittiert wird; wobei das Verfahren durch die folgenden Schritte gekennzeichnet ist:
Beenden der Emission des Laserstrahls, nachdem der sich entlang der ersten Seite (L1) bewegende Bearbeitungskopf (35) den Eckbereich (A) erreicht hat;
Bewegen des Bearbeitungskopfes (35) vom Eckbereich (A) zu einer ersten vorbestimmten Position (D), die durch einen ersten vorbestimmten Abstand (D1) entlang der zweiten Seite (L2) getrennt ist, während der Laserstrahl intermittierend emittiert wird, und
Beenden der Emission des Laserstrahls und Bewegen des Bearbeitungskopfes (35), wenn der Bearbeitungskopf (35) die erste vorbestimmte Position (D) erreicht;
Bewegen des Bearbeitungskopfes (35) zu einer Position (E), die auf einer Verlängerungslinie der zweiten Seite (L2) und vor dem Eckbereich (A) liegt, und anschließendes Beschleunigen des Bearbeitungskopfes (35) in Richtung des Eckbereichs (A) in einem Zustand, in dem die Emission des Laserstrahls gestoppt ist; und
Beginnen der Emission des Laserstrahls, wenn der in Richtung des Eckbereichs (A) beschleunigende Bearbeitungskopf (35) den Eckbereich (A) erreicht, und Bewegen des Bearbeitungskopfs (35) entlang der zweiten Seite (L2).

2. Das Laserbearbeitungsverfahren gemäß Anspruch 1, wobei
der Eckbereich (A) ein Eckbereich ist, der einen konvexen Bereich zur Außenseite eines Produkts auf der Schnittbearbeitungsbahn aufweist, und
das Beenden der Emission des Laserstrahls, nachdem der sich entlang der ersten Seite (L1) bewegende Bearbeitungskopf (35) den Eckbereich (A) erreicht hat, umfasst:
Bewegen des Bearbeitungskopfes (35) von dem Eckbereich (A) zu einer zweiten vorbestimmten Position (B), die durch einen zweiten vorbestimmten Abstand (D2) entlang einer Verlängerungslinie der ersten Seite (L1) getrennt ist, während der Laserstrahl emittiert wird, nachdem der Bearbeitungskopf (35), der sich entlang der ersten Seite (L1) bewegt, den Eckabschnitt (A) erreicht hat; und
Beenden der Emission des Laserstrahls, wenn der Bearbeitungskopf (35) die zweite vorbestimmte Position (B) erreicht.

3. Das Laserbearbeitungsverfahren gemäß Anspruch 1 oder 2, wobei
der Eckbereich (A) ein Eckbereich eines Ausschnitts auf der Schneidbearbeitungsbahn ist, und
das Beenden der Emission des Laserstrahls, nachdem der sich entlang der ersten Seite (L1) bewegende Bearbeitungskopf (35) den Eckbereich (A) erreicht hat, umfasst:
das Beenden der Laserstrahlabgabe, wenn der sich entlang der ersten Seite (L1) bewegende Bearbeitungskopf (35) den Eckbereich (A) erreicht.

4. Das Laserbearbeitungsverfahren gemäß Anspruch 2, wobei
der zweite vorbestimmte Abstand (D2) auf der Grundlage des Materials des Werkstücks (W) festgelegt wird.

5. Das Laserbearbeitungsverfahren gemäß einem der Ansprüche 1 bis 4, wobei
der erste vorbestimmte Abstand (D1) auf der Grundlage des Materials des Werkstücks (W) festgelegt wird.

6. Eine Laserbearbeitungsmaschine (1A) umfassend:
einen Bearbeitungsmaschinenhauptkörper, der eine Schneidbearbeitung eines Werkstücks (W) durchführt, indem er einen Bearbeitungskopf (35) relativ bewegt, der einen Laserstrahl entlang einer Schneidbearbeitungsbahn mit einer ersten Seite (L1), einer zweiten Seite (L2) und einem Eckbereich (A), in dem sich die erste Seite (L1) und die zweite Seite (L2) schneiden, auf das Werkstück (W) richtet; und
eine Steuereinheit (60A), die konfiguriert ist den Bearbeitungsmaschinenhauptkörper zu steuern, **dadurch gekennzeichnet, dass** die Steuereinheit (60A) konfiguriert ist den Bearbeitungsmaschinenhauptkörper folgendermaßen zu steuern:
Bewegen des Bearbeitungskopfs (35) entlang der ersten Seite (L1) ohne Verlangsamung zum Eckbereich (A), während der Laserstrahl emittiert wird;
Stoppen der Emission des Laserstrahls und die Bewegung des Bearbeitungskopfes (35), nachdem der sich entlang der ersten Seite (L1) bewegende Bearbeitungskopf (35) den Eckbereich (A) erreicht hat;
Bewegen des Bearbeitungskopfes (35) von dem Eckbereich (A) zu einer ersten vorbestimmten Position (D), die durch einen ersten vorbestimmten Abstand (D1) entlang der zweiten Seite (L2) getrennt ist, während der Laserstrahl intermittierend emittiert wird, und Beenden der Emission des Laserstrahls, wenn der Bearbeitungskopf (35) die erste vorbestimmte Position (D) erreicht;
Bewegen des Bearbeitungskopfes (35) zu einer Position (E), die auf einer Verlängerungslinie der zweiten Seite (L2) und vor dem Eckbereich (A) liegt, und anschließendes Beschleunigen des Bearbeitungskopfes (35) in Richtung des Eckbereichs (A) in einem Zustand, in dem die Emission des Laserstrahls gestoppt ist; und beginnen mit der Emission des Laserstrahls, wenn der in Richtung des Eckbereichs (A) beschleunigende Bearbeitungskopf (35) den Eckbereich (A) erreicht, und bewegen des Bearbeitungskopfs (35) entlang der zweiten Seite (L2).

7. Ein Laserbearbeitungsverfahren, umfassend:
Bewegen eines Laserstrahls (LB) unter normalen Bearbeitungsbedingungen, der einen Scheitelpunkt erreicht hat, indem er sich auf einem Werkstück (W) entlang einer von zwei Seiten bewegt, die an dem Scheitelpunkt eines Eckbereichs (401) aneinanderstoßen, der einen konvexen Bereich zur Außenseite eines durch Schneiden und Bearbeiten des Werkstücks erhaltenen Produkts (400) aufweist, weiter auf dem Werkstück (W) zu einem ersten Bearbeitungspunkt (403) auf dem Werkstück (W) zu einem ersten Bearbeitungspunkt (403), der auf einer Verlängerungslinie einer Seite entlang der Verlängerungslinie einer Seite durch den Scheitelpunkt positioniert ist;
Bewegen einer Bestrahlungsposition des Laserstrahls (LB) auf dem Werkstück (W) vom ersten Bearbeitungspunkt (403) zu einem zweiten Bearbeitungspunkt (405), der auf einer Verlängerungslinie der anderen Seite zwischen den beiden Seiten positioniert ist; wobei
das Verfahren **gekennzeichnet ist durch** die folgenden Schritte:
Bewegen des Laserstrahls (LB) auf dem Werkstück (W) vom zweiten Bearbeitungspunkt (405) zu einem dritten Bearbeitungspunkt (407) auf der anderen Seite entlang der Verlängerungslinie der anderen Seite und der anderen Seite durch den Scheitelpunkt hindurch, unter einer Eckbearbeitungsbedingung mit geringerer Geschwindigkeit und geringerer Leistung als der normalen Bearbeitungsbedingung;
Bewegen der Bestrahlungsposition des Laserstrahls (LB) auf dem Werkstück (W) vom dritten Bearbeitungspunkt (407) zum zweiten Bearbeitungspunkt (405) in einem Zustand, in dem die Leistung des Laserstrahls (LB) gestoppt ist; und
Bewegen des Laserstrahls (LB), der sich auf dem Werkstück (W) vom zweiten Bearbeitungspunkt (405) zum Scheitelpunkt entlang der Verlängerungslinie der anderen Seite unter normalen Bearbeitungsbedingungen bewegt hat, weiter auf dem Werkstück (W) entlang der anderen Seite unter normalen Bearbeitungsbedingungen.

8. Das Laserbearbeitungsverfahren gemäß Anspruch 7, wobei
die Bestrahlungsposition des Laserstrahls (LB) auf dem Werkstück (W) durch Durchlaufen einer Schleife vom ersten Bearbeitungspunkt (403) entlang der Verlängerungslinie einer Seite zum zweiten Bearbeitungspunkt (405) entlang der Verlängerungslinie der anderen Seite bewegt wird.

9. Das Laserbearbeitungsverfahren gemäß Anspruch 7 oder 8, wobei
der Laserstrahl (LB) unter normalen Bearbeitungsbedingungen auf dem Werkstück (W) vom ersten Bearbeitungspunkt (403) zum zweiten Bearbeitungspunkt (405) bewegt wird.

10. Eine Laserbearbeitungsmaschine (1B) umfassend:
einen Bearbeitungsmaschinenhauptkörper (50B), der ein Werkstück (W) mit einem Laserstrahl (LB) entlang einer Bahn bestrahlt, die einer Form eines Produkts (400) entspricht, das durch Schneiden und Bearbeiten des Werkstücks (W) erhalten wird; und
eine Steuereinheit (60B), die konfiguriert ist den Bearbeitungsmaschinenhauptkörper (50B) zu steuern, **dadurch gekennzeichnet, dass** die Steuereinheit (60B) konfiguriert ist den Bearbeitungsmaschinenhauptkörper (50B) folgendermaßen zu steuern:
Bewegen eines Laserstrahls (LB) unter normalen Bearbeitungsbedingungen, der einen Scheitelpunkt erreicht hat, indem er sich auf einem Werkstück (W) entlang einer von zwei Seiten bewegt, die an dem Scheitelpunkt eines Eckbereichs (401), der einen konvexen Bereich zur Außenseite des Produkts (400) hin aufweist, aneinanderstoßen, weiter auf dem Werkstück (W) zu einem ersten Bearbeitungspunkt (403), der auf einer Verlängerungslinie einer Seite entlang der Verlängerungslinie einer Seite durch den Scheitelpunkt positioniert ist;
Bewegen einer Bestrahlungsposition des Laserstrahls (LB) auf dem Werkstück (W) vom ersten Bearbeitungspunkt (403) zu einem zweiten Bearbeitungspunkt (405), der auf einer Verlängerungslinie der anderen Seite der beiden Seiten positioniert ist;
Bewegen des Laserstrahls (LB) auf dem Werkstück (W) vom zweiten Bearbeitungspunkt (405) zu einem dritten Bearbeitungspunkt (407) auf der anderen Seite entlang der Verlängerungslinie der anderen Seite und der anderen Seite durch den Scheitelpunkt hindurch, unter einer Eckbearbeitungsbedingung mit geringerer Geschwindigkeit und geringerer Leistung als der normalen Bearbeitungsbedingung;
Bewegen der Bestrahlungsposition des Laserstrahls (LB) auf dem Werkstück (W) vom dritten Bearbeitungspunkt (407) zum zweiten Bearbeitungspunkt (405) in einem Zustand, in dem die Leistung des Laserstrahls (LB) gestoppt ist; und
Bewegen des Laserstrahls (LB), der sich auf dem Werkstück (W) vom zweiten Bearbeitungspunkt (405) zum Scheitelpunkt entlang der Verlängerungslinie der anderen Seite unter normalen Bearbeitungsbedingungen bewegt hat, weiter auf dem Werkstück (W) entlang der anderen Seite durch den dritten Bearbeitungspunkt unter normalen Bearbeitungsbedingungen.

## Revendications

1. Procédé d'usinage au laser qui réalise un usinage de découpe d'une pièce à usiner (W) en déplaçant de manière relative une tête d'usinage (35) qui émet un faisceau laser vers la pièce à usiner (W) le long d'un lieu d'usinage de découpe ayant un premier côté (L1), un second côté (L2) et une partie d'angle (A) où le premier côté (L1) et le second côté (L2) se croisent, le procédé comportant :
le déplacement de la tête d'usinage (35) vers la partie d'angle (A) le long du premier côté (L1) sans décélération tout en émettant le faisceau laser ;
le procédé étant **caractérisé par** les étapes suivantes :
l'arrêt de l'émission du faisceau laser après que la tête d'usinage (35) se déplaçant le long du premier côté (L1) a atteint la partie d'angle (A) ;
le déplacement de la tête d'usinage (35) de la partie d'angle (A) vers une première position prédéterminée (D) séparée d'une première distance prédéterminée (D1) le long du second côté (L2) tout en émettant le faisceau laser de manière intermittente, et l'arrêt de l'émission du faisceau laser et du déplacement la tête d'usinage (35) lorsque la tête d'usinage (35) atteint la première position prédéterminée (D) ;
le déplacement de la tête d'usinage (35) à une position (E) qui se trouve sur une ligne d'extension du second côté (L2) et avant la partie d'angle (A), puis l'accélération de la tête d'usinage (35) vers la partie d'angle (A), dans un état où une émission du faisceau laser est arrêtée ; et
le démarrage de l'émission du faisceau laser lorsque la tête d'usinage (35) accélérant vers la partie d'angle (A) atteint la partie d'angle (A), et le déplacement de la tête d'usinage (35) le long du second côté (L2).

2. Procédé d'usinage au laser selon la revendication 1, où
la partie d'angle (A) est une partie d'angle qui présente une partie convexe vers un côté extérieur d'un produit sur le lieu d'usinage de découpe, et
l'arrêt de l'émission du faisceau laser après que la tête d'usinage (35) se déplaçant le long du premier côté (L1) a atteint la partie d'angle (A) inclut :
le déplacement de la tête d'usinage (35) depuis la partie d'angle (A) vers une seconde position prédéterminée (B) séparée d'une seconde distance prédéterminée (D2) le long d'une ligne d'extension du premier côté (L1) tout en émettant le faisceau laser, après que la tête d'usinage (35) se déplaçant le long du premier côté (L1) a atteint la partie d'angle (A) ; et
l'arrêt de l'émission du faisceau laser lorsque la tête d'usinage (35) atteint la seconde position prédéterminée (B).

3. Procédé d'usinage au laser selon la revendication 1 ou 2, où
la partie d'angle (A) est une partie d'angle d'une découpe sur le lieu d'usinage de découpe, et
l'arrêt de l'émission du faisceau laser après que la tête d'usinage (35) se déplaçant le long du premier côté (L1) a atteint la partie d'angle (A) inclut :
l'arrêt de l'émission du faisceau laser lorsque la tête d'usinage (35) se déplaçant le long du premier côté (L1) a atteint la partie d'angle (A).

4. Procédé d'usinage au laser selon la revendication 2, où
la seconde distance prédéterminée (D2) est définie en fonction du matériau de la pièce à usiner (W).

5. Procédé d'usinage au laser selon l'une quelconque des revendications 1 à 4, où
la première distance prédéterminée (D1) est définie en fonction du matériau de la pièce à usiner (W).

6. Machine d'usinage au laser (1A) comportant :
un corps principal de machine d'usinage (W) qui réalise un usinage de découpe d'une pièce à usiner (W) en déplaçant de manière relative une tête d'usinage (35) qui émet un faisceau laser vers la pièce à usiner le long d'un lieu d'usinage de découpe ayant un premier côté (L1), un second côté (L2) et une partie d'angle (A) où le premier côté (L1) et le second côté (L2) se croisent ; et
une unité de commande (60A) configurée pour commander le corps principal de machine d'usinage,
**caractérisée en ce que**
l'unité de commande (60A) est configurée pour commander le corps principal de machine d'usinage de manière à :
déplacer la tête d'usinage (35) vers la partie d'angle (A) le long du premier côté (L1) sans décélérer tout en émettant le faisceau laser ;
arrêter l'émission du faisceau laser et le déplacement de la tête d'usinage (35) après que la tête d'usinage (35) se déplaçant le long du premier côté (L1) a atteint la partie d'angle (A) ;
déplacer la tête d'usinage (35) de la partie d'angle (A) vers une première position prédéterminée (D) séparée d'une première distance prédéterminée (D1) le long du second côté (L2) tout en émettant le faisceau laser de manière intermittente, et arrêter l'émission du faisceau laser lorsque la tête d'usinage (35) atteint la première position prédéterminée (D) ;
déplacer la tête d'usinage (35) vers une position (E) qui se trouve sur une ligne d'extension du second côté (L2) et avant la partie d'angle (A), puis accélérer la tête d'usinage (35) vers la partie d'angle (A), dans un état où une émission du faisceau laser est arrêtée ; et
commencer à émettre le faisceau laser lorsque la tête d'usinage (35) accélérant vers la partie d'angle (A) atteint la partie d'angle (A), et déplacer la tête d'usinage (35) le long du second côté (L2).

7. Procédé d'usinage au laser comportant :
le déplacement d'un faisceau laser (LB) dans une condition d'usinage normale, qui a atteint un sommet en se déplaçant sur une pièce à usiner (W) le long d'un côté parmi deux côtés qui sont mis en contact l'un avec l'autre au niveau du sommet d'une partie d'angle (401) qui présente une partie convexe vers un côté extérieur d'un produit (400) obtenu par découpage et usinage de la pièce à usiner, plus loin sur la pièce à usiner (W) vers un premier point d'usinage (403) positionné sur une ligne d'extension d'un côté le long de la ligne d'extension d'un côté en passant par le sommet ;
le déplacement d'une position d'irradiation du faisceau laser (LB) sur la pièce à usiner (W) du premier point d'usinage (403) à un deuxième point d'usinage (405) qui est positionné sur une ligne d'extension de l'autre côté parmi les deux côtés ;
le procédé étant **caractérisé par** les étapes suivantes :
le déplacement du faisceau laser (LB) sur la pièce à usiner (W) du deuxième point d'usinage (405) vers un troisième point d'usinage (407) sur l'autre côté le long de la ligne d'extension de l'autre côté et de l'autre côté en passant par le sommet, dans une condition d'usinage d'angle ayant une vitesse et un rendement inférieurs à ceux de la condition d'usinage normale ;
le déplacement de la position d'irradiation du faisceau laser (LB) sur la pièce à usiner (W) du troisième point d'usinage (407) au deuxième point d'usinage (405), dans un état où la sortie du faisceau laser (LB) est arrêtée ; et
le déplacement du faisceau laser (LB), qui s'est déplacé sur la pièce à usiner (W) du deuxième point d'usinage (405) au sommet le long de la ligne d'extension de l'autre côté dans la condition d'usinage normale, plus loin sur la pièce à usiner (W) le long de l'autre côté dans la condition d'usinage normale.

8. Procédé d'usinage au laser selon la revendication 7, où
la position d'irradiation du faisceau laser (LB) sur la pièce à usiner (W) est déplacée en passant par une boucle partant du premier point d'usinage (403) le long de la ligne d'extension d'un côté jusqu'au deuxième point d'usinage (405) le long de la ligne d'extension de l'autre côté.

9. Procédé d'usinage au laser selon la revendication 7 ou 8, où
le faisceau laser (LB) dans la condition d'usinage normale est déplacé sur la pièce à usiner (W) du premier point d'usinage (403) au deuxième point d'usinage (405).

10. Machine d'usinage au laser (1B) comportant :
un corps principal de machine d'usinage (50B) qui irradie une pièce à usiner (W) avec un faisceau laser (LB) le long d'un lieu correspondant à une forme d'un produit (400) obtenu par découpage et usinage de la pièce à usiner (W) ; et
une unité de commande (60B) configurée pour commander le corps principal de machine d'usinage (50B),
**caractérisée en ce que**
l'unité de commande (60B) est configurée pour commander le corps principal de machine d'usinage (50B) de manière à :
déplacer un faisceau laser (LB) dans une condition d'usinage normale, qui a atteint un sommet en se déplaçant sur une pièce à usiner (W) le long d'un côté parmi deux côtés qui sont mis en contact l'un avec l'autre au sommet d'une partie d'angle (401) qui présente une partie convexe vers un côté extérieur du produit (400), plus loin sur la pièce à usiner (W) vers un premier point d'usinage (403) positionné sur une ligne d'extension d'un côté le long de la ligne d'extension d'un côté en passant par le sommet ;
déplacer une position d'irradiation du faisceau laser (LB) sur la pièce à usiner (W) du premier point d'usinage (403) vers un deuxième point d'usinage (405) qui est positionné sur une ligne d'extension de l'autre côté parmi les deux côtés ;
déplacer le faisceau laser (LB) sur la pièce à usiner (W) du deuxième point d'usinage (405) vers un troisième point d'usinage (407) sur l'autre côté le long de la ligne d'extension de l'autre côté et de l'autre côté en passant par le sommet, dans une condition d'usinage d'angle ayant une vitesse et un rendement inférieurs à ceux de la condition d'usinage normale ;
déplacer la position d'irradiation du faisceau laser (LB) sur la pièce à usiner (W) du troisième point d'usinage (407) vers le deuxième point d'usinage (405), dans un état où la sortie du faisceau laser (LB) est arrêtée ; et
déplacer le faisceau laser (LB), qui s'est déplacé sur la pièce à usiner (W) du deuxième point d'usinage (405) au sommet le long de la ligne d'extension de l'autre côté dans la condition d'usinage normale, plus loin sur la pièce à usiner (W) le long de l'autre côté par le troisième point d'usinage, dans la condition d'usinage normale.
